(19) Europäisches Patentamt
European Patent Office
Office européen des brevets

(11) **EP 4 472 335 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*H04W 76/28* (2018.01)

(21) Application number: 23794841.9

(22) Date of filing: 16.03.2023

(52) Cooperative Patent Classification (CPC):
H04W 76/28

(86) International application number:
PCT/CN2023/081948

(87) International publication number:
WO 2023/207405 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 CN 202210453381
09.08.2022 CN 202210951229

(71) Applicant: Huawei Technologies Co., Ltd.
Shenzhen, Guangdong 518129 (CN)

(72) Inventors:
• XU, Rui
Shenzhen, Guangdong 518129 (CN)
• QIN, Yi
Shenzhen, Guangdong 518129 (CN)
• CHEN, Erkai
Shenzhen, Guangdong 518129 (CN)
• CAO, Youlong
Shenzhen, Guangdong 518129 (CN)

(74) Representative: Epping - Hermann - Fischer
Patentanwaltsgesellschaft mbH
Schloßschmidstraße 5
80639 München (DE)

(54) **DRX CONFIGURATION-BASED COMMUNICATION METHOD, COMMUNICATION DEVICE, AND COMMUNICATION SYSTEM**

(57) A DRX configuration-based communication method, communication apparatus, and communication system are provided. The method includes: determining a DRX active time, where a start time point of the active time is related to a data cycle; and monitoring a PDCCH in the DRX active time. In this solution, a terminal deter- mines a DRX active time of the terminal based on a data cycle, so that the DRX active time of the terminal can well match the data cycle. This can reduce a delay in receiving or sending the data by the terminal, and help improve user experience.

FIG. 6

**Description**

**CROSS-REFERENCE TO RELATED APPLICATIONS**

This application claims priorities to Chinese Patent Application No. 202210453381.3, filed with the China National Intellectual Property Administration on April 27, 2022 and entitled "DRX CONFIGURATION-BASED COMMUNICATION METHOD, COMMUNICATION APPARATUS, AND COMMUNICATION SYSTEM", and to Chinese Patent Application No. 202210951229.8, filed with the China National Intellectual Property Administration on August 9, 2022 and entitled "DRX CONFIGURATION-BASED COMMUNICATION METHOD, COMMUNICATION APPARATUS, AND COMMUNICATION SYSTEM", both of which are incorporated herein by reference in their entireties.

**TECHNICAL FIELD**

Embodiments of this application relate to the field of wireless communication technologies, and specifically, to a DRX configuration-based communication method, communication apparatus, and communication system.

**BACKGROUND**

Over recent years, with continuous development of 5th generation (5th generation, 5G) communication, a data transmission delay is continuously reduced, and a transmission capacity is increasingly large. The 5G communication gradually penetrates into some multimedia services with a high requirement for real-time performance and a high requirement for a data capacity, such as video transmission, cloud gaming (cloud gaming, CG), and extended reality (extended reality, XR), where XR includes virtual reality (virtual reality, VR) and augmented reality (augmented reality, AR).

With rapid increase of a communication transmission rate, real-time video transmission services gradually become one of core services of a current network. With continuous progress and improvement of an extended reality technology, related industries are booming accordingly. Nowadays, as one of XR technologies, VR technologies are already applied to various fields closely related to people's production and life, for example, education, entertainment, military affairs, medical care, environmental protection, transportation, and public health. Compared with conventional video services, VR services have advantages including multi-view and strong interactivity, and can provide brand-new visual experience for users.

Accompanied with the emergence of the foregoing various services, there is an increasingly high requirement for a transmission delay of service data. Therefore, how to reduce a delay in receiving or sending data by a terminal, to improve user experience requires constant attention.

**SUMMARY**

This application provides a communication method, a communication apparatus, and a communication system, to reduce a delay in receiving or sending data by a terminal, so as to improve user experience.

According to a first aspect, an embodiment of this application provides a communication method. The method may be performed by a terminal or a module used in the terminal, or may be implemented by a logical module or software that can implement all or some terminal functions. An example in which the terminal performs the method is used. The method includes: determining a discontinuous reception (discontinuous reception, DRX) active time, where a start time point of the active time is related to a data cycle; and monitoring a physical downlink control channel (physical downlink control channel, PDCCH) in the DRX active time.

In the foregoing solution, the terminal determines the DRX active time of the terminal based on the data cycle, so that the DRX active time of the terminal can well match the data cycle. This can reduce a delay in receiving or sending the data by the terminal, and help improve user experience. In a possible implementation, configuration information from a radio access network device is received; and the DRX active time is determined based on the configuration information and the data cycle.

In the foregoing solution, the radio access network device configures the terminal to determine the DRX active time based on the data cycle, so that the DRX active time may be accurately determined. This helps implement accurate matching between the DRX active time and the data cycle.

In a possible implementation, the start time point of the active time satisfies:

$$(a1*10+a2) \bmod a3 = f1(a4) \bmod a3 + a5;$$

or

$$(a1*10+a2) \text{ modulo } a3=(f1(a4)+a5) \text{ modulo } a3$$

a1 represents a system frame number corresponding to the start time point, a2 represents a subframe number corresponding to the start time point, f1(a4) represents a function related to a4, a5 is configured by the radio access network device, and modulo represents a modulo operation; and
a3 and a4 satisfy: a3=int(T), and a4=T-int(T), where int represents a rounding operation, and T is the data cycle.

In the foregoing solution, the DRX active time may be accurately calculated, and a calculation method is simple. This helps improve terminal performance, and a minor modification is made to an existing protocol.

In a possible implementation, the start time point of the active time satisfies:

$$(b1*10+b2) \text{ modulo } b3=f2(b3, b4) \text{ modulo } b3+b5;$$

or

$$(b1*10+b2) \text{ modulo } b3=(f2(b3, b4)+b5) \text{ modulo } b3$$

b 1 represents a system frame number corresponding to the start time point, b2 represents a subframe number corresponding to the start time point, f2(b3, b4) represents a function related to b3 and b4, b5 is configured by the radio access network device, and modulo represents a modulo operation; and
a greatest common divisor of b3 and b4 is 1, and satisfies: b3/b4=T, where both b3 and b4 are positive integers, and T is the data cycle.

In the foregoing solution, the DRX active time may be accurately calculated, and a calculation method is simple. This helps improve terminal performance.

In a possible implementation, the start time point of the active time satisfies:

$$(c1*10+c2) \text{ modulo } c3=f3(T) \text{ modulo } c3+c5;$$

or

$$(c1*10+c2) \text{ modulo } c3=(f3(T)+c5) \text{ modulo } c3$$

c1 represents a system frame number corresponding to the start time point, c2 represents a subframe number corresponding to the start time point, f3(T) represents a function related to T, c5 is configured by the radio access network device, and modulo represents a modulo operation; and
a greatest common divisor of c3 and c4 is 1, and satisfies: c3/c4=T, where both c3 and c4 are positive integers, and T is the data cycle.

In the foregoing solution, the DRX active time may be accurately calculated, and a calculation method is simple. This helps improve terminal performance.

In a possible implementation, the start time point of the active time satisfies:

$$\text{int}((d1*10+d2) \text{ modulo } d3)=\text{int}(d4 \text{ modulo } d3);$$

or

$$\text{int}((d1*10+d2) \text{ modulo } d3)=\text{int}(d4)$$

d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

In the foregoing solution, the DRX active time may be accurately calculated, and a calculation method is simple. This helps improve terminal performance.

In a possible implementation, the start time point of the active time is further related to a quantity of offset slots in the DRX cycle, and the quantity of offset slots in the DRX cycle is equal to int(((d1*10+d2-d4) modulo d3)*d5). d5 represents a quantity of slots in one subframe.

In a possible implementation, the start time point of the active time satisfies:

$$int(((e1*10+e2)*e3+e4) \; modulo \; e5)=int((e6*e3+e7) \; modulo \; e5)$$

e1 represents a system frame number corresponding to the start time point, e2 represents a subframe number corresponding to the start time point, e3 represents a quantity of slots included in one subframe, e4 represents an e4$^{th}$ slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation. In the foregoing solution, the DRX active time may be accurately calculated, and a calculation method is simple. This helps improve terminal performance.

In a possible implementation, the start time point of the active time satisfies:

$$f1*f2+f3=int[(f4+i*f5)*f2/10] \; modulo \; (1024*f2)$$

f1 represents a system frame number corresponding to the start time point, f2 represents a quantity of slots included in one system frame, f3 represents a slot number corresponding to the start time point, f4 represents a quantity of offset subframes in a DRX cycle, f5 represents duration of the DRX cycle, f5=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple. This helps improve terminal performance.

In a possible implementation, the start time point of the active time satisfies:

$$(g1*g2*g3)+(g4*g3)+g5=int[(g6*g2*g3+g7*g3+g8)+i*g9] \; modulo \; (1024*g2*g3)$$

g1 represents a system frame number corresponding to the start time point, g2 represents a quantity of slots included in one system frame, g3 represents a quantity of symbols included in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple. This helps improve terminal performance.

In a possible implementation, the start time point of the active time satisfies:

$$h1*10+h2=int[(h3+i*h4)] \; modulo \; (1024*10)$$

h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple. This helps improve terminal performance.

In a possible implementation, the data cycle is configured by the radio access network device.

In the foregoing solution, the radio access network device configures the data cycle for the terminal, so that consistency between the data cycle used by the terminal and a data cycle used by the radio access network device can be ensured, and the data cycle is accurately configured for the terminal. This helps accurately configure the DRX active time.

In a possible implementation, the data cycle is obtained by the terminal through measurement.

In the foregoing solution, the terminal measures the data cycle, so that the data cycle may be accurately determined. This helps accurately configure the DRX active time.

In a possible implementation, the data cycle is configured by an application server.

In the foregoing solution, the application server configures the data cycle for the terminal, so that the data cycle may be accurately configured for the terminal. This helps accurately configure the DRX active time.

In a possible implementation, the PDCCH carries information used to schedule the data.

In a possible implementation, the data cycle T is a non-integer.

According to a second aspect, an embodiment of this application provides a communication method. The method may be performed by a radio access network device or a module used in the radio access network device, or may be implemented by a logical module or software that can implement all or some radio access network device functions. An example in which the radio access network device performs the method is used. The method includes: sending configuration information to a terminal, where the configuration information is used to configure that a start time point of a DRX active time is determined based on a data cycle.

In the foregoing solution, the radio access network device configures the terminal to determine the DRX active time of the terminal based on the data cycle, so that the DRX active time of the terminal can well match the data cycle. This can reduce a delay in receiving or sending the data by the terminal, and help improve user experience.

In a possible implementation, control information is sent to the terminal on a PDCCH in the DRX active time.

In a possible implementation, the control information is used to schedule the data.

In a possible implementation, the start time point of the active time satisfies:

$$(a1*10+a2) \bmod a3 = f1(a4) \bmod a3 + a5$$

a1 represents a system frame number corresponding to the start time point, a2 represents a subframe number corresponding to the start time point, f1(a4) represents a function related to a4, a5 is configured by the radio access network device, and modulo represents a modulo operation; and

a3 and a4 satisfy:

a3=int(T), and a4=T-int(T), where int represents a rounding operation, and T is the data cycle.

In the foregoing solution, the DRX active time may be accurately calculated, and a calculation method is simple. This helps improve terminal performance.

In a possible implementation, the start time point of the active time satisfies:

$$(b1*10+b2) \bmod b3 = f2(b3, b4) \bmod b3 + b5;$$

or

$$(b1*10+b2) \bmod b3 = (f2(b3, b4)+b5) \bmod b3$$

b 1 represents a system frame number corresponding to the start time point, b2 represents a subframe number corresponding to the start time point, f2(b3, b4) represents a function related to b3 and b4, b5 is configured by the radio access network device, and modulo represents a modulo operation; and

a greatest common divisor of b3 and b4 is 1, and satisfies: b3/b4=T, where both b3 and b4 are positive integers, and T is the data cycle.

In the foregoing solution, the DRX active time may be accurately calculated, and a calculation method is simple. This helps improve terminal performance.

In a possible implementation, the start time point of the active time satisfies:

$$(c1*10+c2) \bmod c3 = f3(T) \bmod c3 + c5;$$

or

$$(c1*10+c2) \bmod c3 = (f3(T)+c5) \bmod c3$$

c1 represents a system frame number corresponding to the start time point, c2 represents a subframe number corresponding to the start time point, f3(T) represents a function related to T, c5 is configured by the radio access network device, and modulo represents a modulo operation; and

a greatest common divisor of c3 and c4 is 1, and satisfies: c3/c4=T, where both c3 and c4 are positive integers, and T is the data cycle.

In the foregoing solution, the DRX active time may be accurately calculated, and a calculation method is simple. This helps improve terminal performance.

In a possible implementation, the start time point of the active time satisfies:

$$int((d1*10+d2) \bmod d3) = int(d4 \bmod d3);$$

or

$$int((d1*10+d2) \text{ modulo } d3)=int(d4)$$

d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

In the foregoing solution, the DRX active time may be accurately calculated, and a calculation method is simple. This helps improve terminal performance.

In a possible implementation, the start time point of the active time is further related to a quantity of offset slots in the DRX cycle, and the quantity of offset slots in the DRX cycle is equal to $int(((d1*10+d2-d4) \text{ modulo } d3)*d5)$.

d5 represents a quantity of slots in one subframe.

In a possible implementation, the start time point of the active time satisfies:

$$int(((e1*10+e2)*e3+e4) \text{ modulo } e5)=int((e6*e3+e7) \text{ modulo } e5)$$

e1 represents a system frame number corresponding to the start time point, e2 represents a subframe number corresponding to the start time point, e3 represents a quantity of slots included in one subframe, e4 represents an e4$^{th}$ slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation. In the foregoing solution, the DRX active time may be accurately calculated, and a calculation method is simple. This helps improve terminal performance.

In a possible implementation, the start time point of the active time satisfies:

$$f1*f2+f3=int[(f4+i*f5)*f2/10] \text{ modulo } (1024*f2)$$

f1 represents a system frame number corresponding to the start time point, f2 represents a quantity of slots included in one system frame, f3 represents a slot number corresponding to the start time point, f4 represents a quantity of offset subframes in a DRX cycle, f5 represents duration of the DRX cycle, f5=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple. This helps improve terminal performance.

In a possible implementation, the start time point of the active time satisfies:

$$(g1*g2*g3)+(g4*g3)+g5=int[(g6*g2*g3+g7*g3+g8)+i*g9] \text{ modulo } (1024*g2*g3)$$

g1 represents a system frame number corresponding to the start time point, g2 represents a quantity of slots included in one system frame, g3 represents a quantity of symbols included in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple. This helps improve terminal performance.

In a possible implementation, the start time point of the active time satisfies:

$$h1*10+h2=int[(h3+i*h4)] \text{ modulo } (1024*10)$$

h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an i$^{th}$ DRX cycle or the DRX active time, modulo represents a modulo operation, and int represents a rounding operation.

In the foregoing solution, the DRX active time may be accurately calculated, and a calculation method is simple.

This helps improve terminal performance.

In a possible implementation, the configuration information is further used to configure the data cycle.

Compared with that two pieces of configuration information are separately used to configure the terminal to determine the DRX active time based on the data cycle and configure the data cycle, in the foregoing solution, one piece of configuration information is used to configure the terminal to determine the DRX active time based on the data cycle, and is further used to configure the data cycle. Therefore, signaling overheads can be reduced, and this helps improve terminal performance. In a possible implementation, information used to configure the data cycle is sent to the terminal. In a possible implementation, the data cycle T is a non-integer.

According to a third aspect, an embodiment of this application provides a communication apparatus. The apparatus may be a terminal or a module used in the terminal, or may be a logical module or software that can implement all or some terminal functions. The apparatus has a function of implementing any implementation of the first aspect. The function may be implemented by hardware, or may be implemented by hardware executing corresponding software. The hardware or the software includes one or more modules corresponding to the function. According to a fourth aspect, an embodiment of this application provides a communication apparatus. The apparatus may be a radio access network device or a module used in the radio access network device, or may be a logical module or software that can implement all or some radio access network device functions. The apparatus has a function of implementing any implementation of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation of the first aspect and the second aspect. According to a sixth aspect, an embodiment of this application provides a communication apparatus, including a unit or a means (means) configured to perform steps of any implementation of the first aspect and the second aspect.

According to a seventh aspect, an embodiment of this application provides a communication apparatus, including a processor and an interface circuit. The processor is configured to: communicate with another apparatus through the interface circuit, and perform any implementation of the first aspect and the second aspect. There are one or more processors. According to an eighth aspect, an embodiment of this application provides a communication apparatus, including a processor coupled to a memory. The processor is configured to invoke a program stored in the memory, to perform any implementation of the first aspect and the second aspect. The memory may be located inside or outside the apparatus. In addition, there may be one or more processors.

According to a ninth aspect, an embodiment of this application further provides a computer-readable storage medium. The computer-readable storage medium stores a computer program or instructions. When the computer program or the instructions are run on a communication apparatus, any implementation of the first aspect and the second aspect is performed.

According to a tenth aspect, an embodiment of this application further provides a computer program product. The computer program product includes a computer program or instructions. When the computer program or the instructions are run on a communication apparatus, any implementation of the first aspect and the second aspect is performed.

According to an eleventh aspect, an embodiment of this application further provides a chip system, including a processor, configured to perform any implementation of the first aspect and the second aspect.

According to a twelfth aspect, an embodiment of this application further provides a communication system. The communication system includes a communication apparatus configured to perform any implementation of the first aspect and a communication apparatus configured to perform any implementation of the second aspect.

## BRIEF DESCRIPTION OF DRAWINGS

FIG. 1 is a diagram of an architecture of a communication system to which an embodiment of this application is applied;
FIG. 2 is an example diagram of a cycle in which data of an XR service arrives at a base station;
FIG. 3 is an example diagram of a DRX cycle;
FIG. 4 is an example diagram of a long DRX cycle and a short DRX cycle;
FIG. 5 is an example diagram of a DRX configuration of data of an XR service;
FIG. 6 is a schematic flowchart of a communication method according to an embodiment of this application;
FIG. 7 is an example diagram of a DRX active time;
FIG. 8 is another example diagram of a DRX active time;
FIG. 9 is another example diagram of a DRX active time;
FIG. 10 is another example diagram of a DRX active time;

FIG. 11 is a diagram of a structure of a communication apparatus according to an embodiment of this application; and

FIG. 12 is a diagram of a structure of a communication apparatus according to an embodiment of this application.

## DESCRIPTION OF EMBODIMENTS

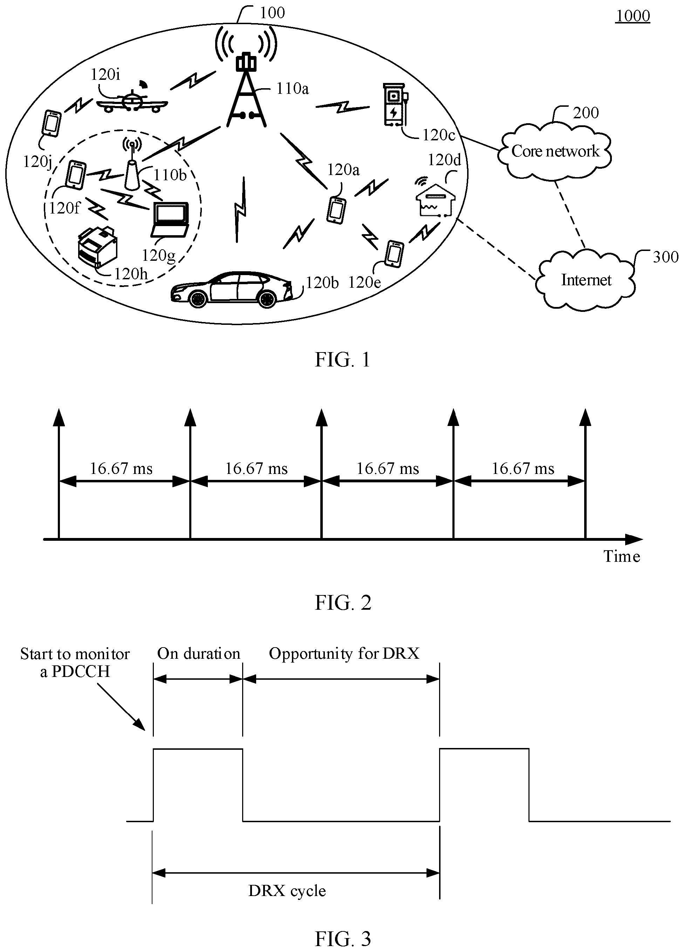

FIG. 1 is a diagram of an architecture of a communication system to which an embodiment of this application is applied. The communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connections between terminals and between radio access network devices. FIG. 1 is merely a diagram. The communication system in FIG. 1 may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of the base station, for example, may be a central unit (central unit, CU), or may be a distributed unit (distributed unit, DU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP). The DU completes functions of a radio link control layer and a media access control (media access control, MAC) layer of the base station, and may further complete some or all functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. All or some functions of the radio access network device in this application may also be implemented by using a software function running on hardware, or may be implemented by using a virtualization function instantiated on a platform (for example, a cloud platform). A specific technology and a specific device form that are used by the radio access network device are not limited in embodiments of this application. In embodiments of this application, an example in which a base station is used as a radio access network device is used for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, automatic driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. All or some functions of the terminal in this application may also be implemented by using a software function running on hardware, or may be implemented by using a virtualization function instantiated on a platform (for example, a cloud platform). A specific technology and a specific device form that are used by the terminal are not limited in embodiments of this application.

The base station and the terminal may be fixed or movable. The base station and the terminal may be deployed on land, including an indoor or outdoor scenario, and a handheld or vehicle-mounted scenario; or may be deployed on water; or may be deployed on an aircraft, a balloon, or a man-made satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG.

1 each may be referred to as a communication apparatus having functions of a base station, and 120a to 120j in FIG. 1 each may be referred to as a communication apparatus having functions of a terminal.

Communication between a base station and a terminal, between base stations, or between terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, functions of the base station may be performed by a module (for example, a chip) in the base station, or may be performed by a control subsystem including the functions of the base station. The control subsystem including the functions of the base station herein may be a control center in the foregoing application scenarios, such as a smart grid, industrial control, smart transportation, and a smart city. Functions of the terminal may be performed by a module (for example, a chip or a modem) in the terminal, or may be performed by an apparatus including the functions of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal may be interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical broadcast channel (physical broadcast channel, PBCH) are merely used as examples of a downlink data channel, a downlink control channel, an uplink data channel, and a broadcast channel respectively. In different systems and different scenarios, the data channel, the control channel, and the broadcast channel may have different names. This is not limited in embodiments of this application.

In addition to smartphones, people increasingly expect to improve XR experience by using terminals such as head mounted displays (head mounted display, HMD) or smart glasses (such as VR glasses and AR glasses). Different from smartphones, head mounted display and smart glasses focus on power consumption. Especially, smart glasses have a small size and expected to be worn for long time. Therefore, it is clear that power consumption of the smart glasses are expected to be more strictly controlled than power consumption of the smartphones. In cloud games, terminals may be smartphones or tablet computers. For experience of the cloud game that lasts for long time, power consumption of devices and battery life are also important aspects to be considered. Therefore, as XR devices become increasingly lightweight, power consumption of the devices has become a focus of current research while user experience is ensured.

FIG. 2 is an example diagram of a cycle in which data of an XR service arrives at a base station. In this example, a frame rate of the data of the service is 60 frames per second (frames per second, FPS). Therefore, the cycle in which the data of the service arrives at the base station is 1/60 second, which is approximately equal to 16.67 ms. In other words, the base station receives data of an uplink service from a terminal or data of a downlink service from an application server every 16.67 ms.

For transmission of the XR service, generation and arrival of the data are not continuous. On a terminal side, from the perspective of a delay, if downlink control information (downlink control information, DCI) of the base station is monitored in each slot, it is beneficial to receive an uplink grant or downlink data, but power consumption of the terminal increases accordingly. To reduce the power consumption of the terminal, in the case of no transmission of data, PDCCH receiving may suspend (in this case, PDCCH blind detection suspends) to reduce power consumption, so as to increase a battery life. Therefore, a discontinuous reception (discontinuous reception, DRX) technology is introduced for power saving (power saving).

In the DRX mechanism, the base station configures a DRX cycle (DRX cycle) for the terminal.

FIG. 3 is an example diagram of a DRX cycle. One DRX cycle includes an active time (On Duration) and an opportunity for discontinuous reception (opportunity for DRX). The active time is also referred to as active duration, an active period, a continuous reception time period, continuous reception duration, a continuous reception period, or the like. In the active time, the terminal normally monitors a PDCCH. In the discontinuous reception time period, the terminal has an opportunity to enter a sleep state and does not monitor a PDCCH to reduce power consumption. It should be noted that, the terminal in the discontinuous reception time period does not monitor a PDCCH, but may receive data from another physical channel, for example, a physical downlink shared channel (physical downlink shared channel, PDSCH) or an acknowledgment (acknowledgement, ACK) signal.

Selection of the DRX cycle needs to make a balance between battery saving and a delay d. A long DRX cycle is beneficial for prolonging of the battery life of the terminal while a short DRX cycle is conductive to have a faster response in the case of transmission of new data. To meet the foregoing requirements, a plurality of DRX cycles may be configured for the terminal. For example, two DRX cycles, namely, the long DRX cycle (long DRX Cycle) and the short DRX cycle (short DRX Cycle), are configured.

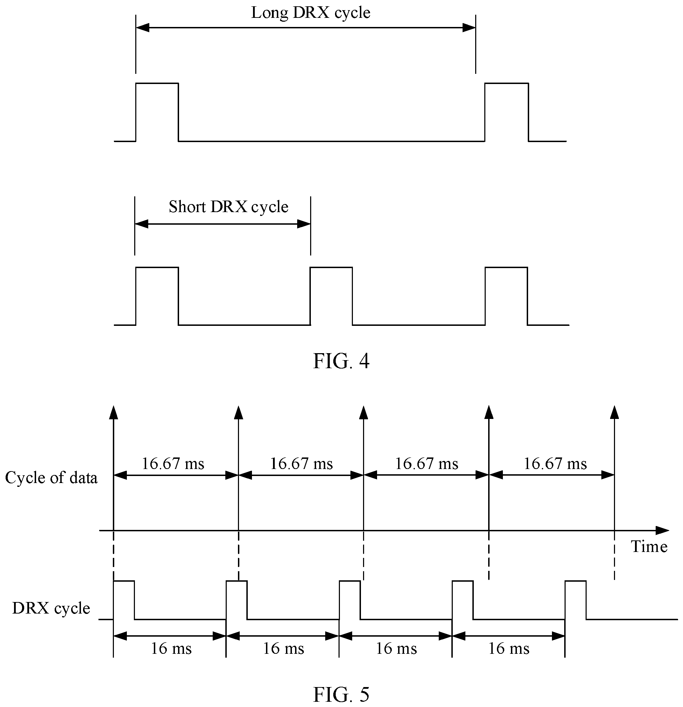

FIG. 4 is an example diagram of a long DRX cycle and a short DRX cycle. In this example, a duration of an active time of the long DRX cycle is the same as a duration of an active time of the short DRX cycle, and a duration of the long DRX cycle is twice a duration of the short DRX cycle. It should be noted that, when the long DRX cycle and the short DRX cycle are configured for the terminal, the terminal uses the long DRX cycle or the short DRX cycle at any time point, but cannot simultaneously use the two DRX cycles.

DRX cycles (including the long DRX cycle and the short DRX cycle) of the terminal are configured by the base station. For example, the base station configures the DRX cycle for the terminal using a DRX-Config information element in radio resource control (Radio Resource Control, RRC) signaling.

DRX-Config may include the following parameters:

(1) drx-LongCycleStartOffset

drx-LongCycleStartOffset is used to configure drx-LongCycle and drx-StartOffset, where drx-LongCycle represents a value of the long DRX cycle, and drx-StartOffset represents a quantity of offset subframes in the long DRX cycle. The two parameters jointly define a subframe where the long DRX cycle starts.

(2) drx-ShortCycle

drx-ShortCycle represents a value of the short DRX cycle.

(3) drx-ShortCycleTimer

drx-ShortCycleTimer is used to configure a quantity of short DRX cycles.

(4) drx-onDurationTimer

drx-onDurationTimer is used to configure a time period of the on duration.

(5) drx-SlotOffset

drx-SlotOffset is used to configure a delay before starting drx-onDurationTimer. To be specific, in a DRX cycle, drx-onDurationTimer starts, after an on duration subframe starts, at a time point after drx-SlotOffset.

drx-SlotOffset is an offset in a subframe, and drx-SlotOffset is less than 1 ms. The following example is a pseudocode representation form of DRX-Config:

```
DRX-Config::=SEQUENCE {
drx-onDurationTimerCHOICE {
subMilliSecondsINTEGER (1..31),
milliSecondsENUMERATED {
        ms1, ms2, ms3, ms4, ms5, ms6, ms8, ms10, ms20, ms30, ms40, ms50, ms60,
        ms80, ms100, ms200, ms300, ms400, ms500, ms600, ms800, ms1000, ms1200,
        ms1600, spare8, spare7, spare6, spare5, spare4, spare3, spare2, spare1}
        },
drx-LongCycleStartOffsetCHOICE {
        ms10            INTEGER (0..9),
        ms20            INTEGER (0..19),
         ms32            INTEGER (0..31),
        ms40            INTEGER (0..39),
        ms60            INTEGER (0..59),
        ms64            INTEGER (0..63),
        ms70            INTEGER (0..69),
        ms80            INTEGER (0..79),
        ms128            INTEGER (0..127),
        ms160            INTEGER (0..159),
        ms256            INTEGER (0..255),
        ms320            INTEGER (0..319),
        ms512            INTEGER (0..511),
        ms640            INTEGER (0..639),
        ms1024            INTEGER (0..1023),
        ms1280            INTEGER (0..1279),
        ms2048            INTEGER (0..2047),
        ms2560            INTEGER (0..2559),
        ms5120            INTEGER (0..5119),
        ms10240        INTEGER (0..10239)
        },
shortDRXSEQUENCE {
```

```
drx-ShortCycleENUMERATED {

        ms2, ms3, ms4, ms5, ms6, ms7, ms8, ms10, ms14, ms16, ms20, ms30, ms32,

        ms35, ms40, ms64, ms80, ms128, ms160, ms256, ms320, ms512, ms640,
spare9,

        spare8, spare7, spare6, spare5, spare4, spare3, spare2, spare1},

    drx-ShortCycleTimerINTEGER (1..16)

        }        OPTIONAL, --Need R

    drx-SlotOffsetINTEGER (0..31)

        }
```

In addition, the terminal may alternatively report parameters of an expected DRX cycle to the base station. For example, the terminal sends assistance information UEAssistanceInformation to the base station. The UEAssistanceInformation includes information indicating the expected DRX cycle. The base station may configure related parameters of the DRX cycle for the terminal with reference to the expected DRX cycle.

For the foregoing DRX mechanism, a DRX active time may not match an arrival time point of service data. As a result, the terminal delays receiving or sending the data, and user experience degrades.

FIG. 5 is an example diagram of a DRX configuration of data of an XR service. In this example, a frame rate of the data of the service is 60 FPS. Therefore, a length of a data cycle of the service is 16.67 ms, a length of a DRX cycle of the terminal is 16 ms, and a start time point of a first DRX cycle is aligned with an arrival time point of the data of the service. It may be learned that, both start time points and arrival time points of the data in the first two cycles fall within a DRX active time of the terminal, and a start time point and an arrival time point of the data of the service do not fall within the DRX active time of the terminal in several cycles starting from a third cycle.

For uplink data of the service, the base station schedules, in the first two cycles, the terminal to send the uplink data. In the several cycles starting from the third cycle, the base station does not schedule the terminal to send the uplink data, causing a delay in sending the data by the terminal.

For downlink data of the service, the base station schedules, in the first two cycles, the terminal to receive the downlink data. In the several cycles starting from the third cycle, the base station does not schedule the terminal to receive the downlink data, causing a delay in receiving the data by the terminal.

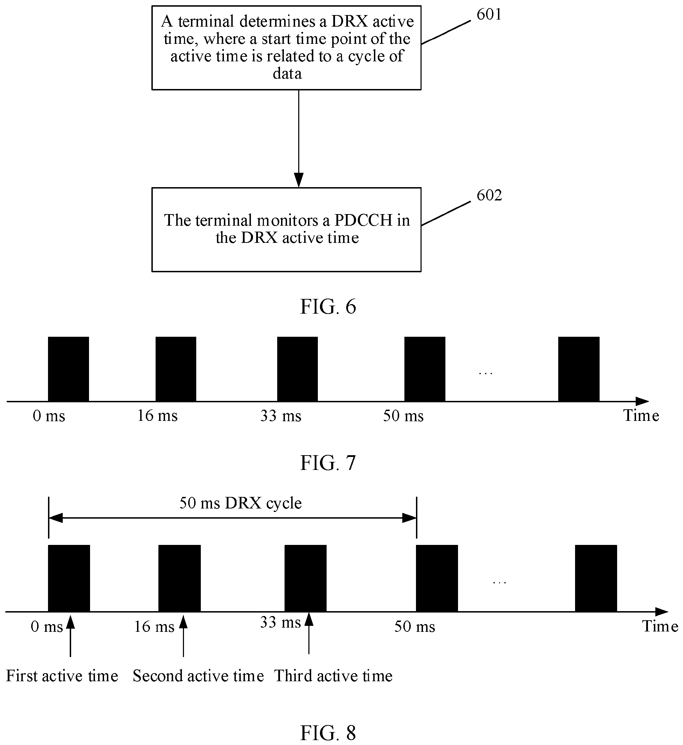

FIG. 6 is a schematic flowchart of a communication method according to an embodiment of this application. The method includes the following steps.

Step 601: A terminal determines a DRX active time, where a start time point of the active time is related to a data cycle.

The data cycle is a cycle in which data of a target service is received or sent. The target service may be an XR service, a video service, or the like. The data may be at least one data frame of the target service, at least one data slice (slice) of the target service, at least one data tile (tile) of the target service, or at least one protocol data unit (protocol data unit, PDU) set (PDU set) of the target service. One PDU set includes one or more of at least one data frame, at least one data slice, or at least one data tile.

It should be noted that, because the data cycle and a frame rate of the data are in a reciprocal relationship, the start time point of the active time is related to the data cycle. It may also be understood that, the start time point of the active time is related to the frame rate of the data.

In an implementation, a base station sends configuration information to the terminal. The configuration information is used to configure that the start time point of the DRX active time is determined based on the data cycle, and then the terminal determines the DRX active time based on the configuration information and the data cycle. It may be understood that, the configuration information triggers the terminal to determine the DRX active time based on the data cycle. Optionally, the configuration information is carried in RRC signaling and is sent to the terminal. In an implementation, if the data cycle is a cycle of uplink data, the terminal may obtain the data cycle. For example, the terminal obtains the data cycle from an application layer of the terminal. In another implementation, if the data cycle is a cycle of downlink data, the terminal may obtain the data cycle by using but not limited to the following three methods.

Method 1: An application server corresponding to the data sends, via a user plane, the data cycle to the terminal.

That is, the terminal receives the data cycle from the application server.

Method 2: The data cycle is configured by the base station for the terminal.

For example, the foregoing configuration information is used to configure that the start time point of the DRX active time of the terminal is determined based on the data cycle, and further indicates the data cycle to the terminal.

Therefore, the terminal determines the data cycle based on the configuration information. For another example, the base station sends, to the terminal, information used to configure the data cycle, and the terminal determines the data cycle based on the information used to configure the data cycle.

For example, if the base station configures the data cycle for the terminal, the base station may obtain the data cycle by using the following method: The base station receives a QoS profile (QoS profile) from a control plane network element of a core network, where the QoS profile includes the data cycle; or the base station detects an arrival time interval of data in a QoS flow, and determines the data cycle based on the time interval.

Method 3: The terminal autonomously obtains the data cycle.

For example, the terminal detects an arrival time interval of data in a QoS flow, and determines the data cycle based on the time interval.

In an implementation, the data cycle T is in a unit of millisecond (ms), where T is a non-integer. Step 602: The terminal monitors a PDCCH in the DRX active time.

The base station generally sends, on the PDCCH, information scheduled data to the terminal in the DRX active time. The terminal monitors the PDCCH in the DRX active time. When the base station sends, on the PDCCH, the information carrying the scheduled data to the terminal in a DRX active time, the terminal may obtain the information about the scheduled data by monitoring the PDCCH.

The information about the scheduled data may be control information, for example, control information used to schedule the downlink data, or control information (for example, grant information) used to schedule the uplink data.

In the foregoing solution, the terminal determines the DRX active time of the terminal based on the data cycle, so that the DRX active time of the terminal can well match the data cycle. This can reduce a delay in receiving or sending the data by the terminal, and help improve user experience. In the foregoing solution, the terminal determines the DRX active time based on the data cycle. Because the data cycle and the frame rate of the data are in the reciprocal relationship, that the terminal determines the DRX active time based on the data cycle may also be understood as that the terminal determines the DRX active time based on the frame rate of the data. Correspondingly, in the foregoing solution, a solution of configuring the data cycle for the terminal may also be understood as configuring the frame rate of the data for the terminal. The solution of configuring the frame rate of the data for the terminal is similar to the solution of configuring the cycle for the terminal, and details are not described again.

Alternatively, in another implementation solution, the terminal determines the cycle/frame rate of the data based on a parameter related to the cycle/frame rate of the data, and then the terminal determines the DRX active time based on the cycle/frame rate of the data. The terminal may obtain the parameter related to the cycle/frame rate of the data based on any one of the following methods: The terminal autonomously obtains the parameter related to the cycle/frame rate of the data, the terminal receives the parameter related to the cycle/frame rate of the data from the base station, the terminal receives the parameter related to the cycle/frame rate of the data from the application server, and so on. This is not limited in this application.

The following describes a condition satisfied by the start time point that is of the DRX active time and that is determined by the terminal.

Method 1: The start time point of the active time satisfies:

$$(a1*10+a2) \text{ modulo } a3 = f1(a4) \text{ modulo } a3 + a5 \qquad \text{Formula (1)}$$

a1 represents a system frame number corresponding to the start time point of the active time, a2 represents a subframe number corresponding to the start time point of the active time, one system frame includes 10 subframes, and duration of one subframe is 1 ms. f1(a4) represents a function related to a4, a5 is configured by the base station, and modulo represents a modulo operation. a3 and a4 satisfy: a3=int(T), and a4=T-int(T), where int represents a rounding operation, which may be rounding up or rounding down, and T is the data cycle.

In an implementation, a5 represents drx-StartOffset configured by the base station for the terminal, and drx-StartOffset represents a quantity of offset subframes in a DRX cycle. For details, refer to the foregoing descriptions.

For example, it is assumed that a data cycle T of the XR service is equal to 16.67 ms, a5=0, and f1(a4)=int(i*a4), where i represents an $i^{th}$ DRX cycle, i starts to be calculated from 0, int(i*a4) represents rounding down a result of i*a4, and int(T) represents rounding down the cycle T. In this case, in Formula (1), a3=int(16.67)=16, and a4=T-int(T) =16.67-16=0.67.

Therefore, Formula (1) is simplified as (a1*10+a2) modulo 16=int(i*0.67) modulo 16.

According to the formula, if a start time point of a subframe in a system frame satisfies the formula, it is determined that the start time point of the subframe is the start time point of the DRX active time. Then, the DRX active time may be determined based on a length of the active time configured by the base station. A subframe number of a subframe is represented by (a1 * 10+a2). For example, when a1=0 and a2=0, it indicates a subframe whose subframe number is 0; when a1=0 and a2=1, it indicates a subframe whose subframe number is 1; when a1=1 and a2=1, it indicates a subframe whose subframe number is 11; and the rest can be deduced by analogy.

For the foregoing example, an example diagram of a DRX active time shown in FIG. 7 may be obtained. Start time points of active times of the DRX are respectively 0 ms, 16 ms, 33 ms, 50 ms, and the like. If a length of the active time configured by the base station is 1 ms, the active times of the DRX are respectively 0 ms to 1 ms, 16 ms to 17 ms, 33 ms to 34 ms, 50 ms to 51 ms, and the like.

For the foregoing example, if f1(a4)=int(i*a4) represents rounding up the result of i*a4, determined start time points of active times of the DRX are respectively 0 ms, 17 ms, 34 ms, 50 ms, and the like. If a length of the active time configured by the base station is 1 ms, the active times of the DRX are respectively 0 ms to 1 ms, 17 ms to 18 ms, 34 ms to 35 ms, 50 ms to 51 ms, and the like.

In another implementation, when the data cycle T is measured in milliseconds (ms), the data cycle T may be replaced with a frame rate of 1000/D, where D (unit: frames/second (FPS)) represents the frame rate of the data. In the foregoing example, if the data cycle T is equal to 16.67 ms, D=60 FPS. a3=int(T) may be replaced with a3=int(1000/D), and a4=T-int(T) may be replaced with a4=1000/D-int(1000/D).

Formula (1) is applicable to that the DRX cycle is a long DRX cycle or a short DRX cycle. In another implementation, the short DRX cycle may be further implemented by using the following formula: (a1*10+a2) modulo a3=(f1(a4)+a5) modulo a3. Meanings of a1, a2, a3, a4, a5, and f1(a4) are the same as meanings of a1, a2, a3, a4, a5, and f1(a4) in Formula (1). For an example of specific values of parameters in the formula, refer to an example of related values in Formula (1). Details are not described again.

Method 2: The start time point of the active time satisfies:

$$(b1*10+b2)\ modulo\ b3=f2(b3,\ b4)\ modulo\ b3+b5 \qquad\qquad Formula\ (2)$$

b1 represents a system frame number corresponding to the start time point, b2 represents a subframe number corresponding to the start time point, one system frame includes 10 subframes, and duration of one subframe is 1 ms. f2(b3, b4) represents a function related to b3 and b4, b5 is configured by the base station, and modulo represents a modulo operation. A greatest common divisor of b3 and b4 is 1, and satisfies: b3/b4=T, where both b3 and b4 are positive integers, b3 may represent duration of a DRX cycle, b4 may represent a quantity of active times in one DRX cycle, and T is the data cycle. In this embodiment of this application, the duration of the DRX cycle may also be expressed as a length of the DRX cycle or a time length of the DRX cycle. A unified description is provided herein, and details are not described below. The DRX cycle may be a long DRX cycle, or may be a short DRX cycle.

In an implementation, b5 represents drx-StartOffset configured by the base station for the terminal, and drx-StartOffset represents a quantity of offset subframes in the DRX cycle. For details, refer to the foregoing descriptions.

For example, it is assumed that a data cycle T of the XR service is equal to 16.67 ms. In this case, in Formula (2), b3=50, and b4=3. It is assumed that f2(b3,b4)=int(i*b3/b4), where i represents an ith active time in one DRX cycle, i is equal to 0, 1, ..., or (b4-1), and int(i*b3/b4) represents rounding down a result of i*b3/b4. It is assumed that b5=0.

Therefore, Formula (2) is simplified as (b1*10+b2) modulo 50=int(i*50/3) modulo 50.

According to the formula, if a start time point of a subframe in a system frame satisfies the formula, it is determined that the start time point of the subframe is the start time point of the DRX active time. Then, the DRX active time may be determined based on a length of the active time configured by the base station. A subframe number of a subframe is represented by (b1 * 10+b2). For example, when b1=0 and b2=0, it indicates a subframe whose subframe number is 0; when b1=0 and b2=1, it indicates a subframe whose subframe number is 1; when b1=1 and b2=1, it indicates a subframe whose subframe number is 11; and the rest can be deduced by analogy.

For the foregoing example, an example diagram of a DRX active time shown in FIG. 8 may be obtained. Because b3=50 and b4=3, the DRX cycle is 50 ms, and there are three active times in one DRX cycle. When i=0, b1=0, and b2=0, the foregoing formula is satisfied. Therefore, 0 ms is the start time point of the DRX active time. When i=1, b1=1, and b2=6, the foregoing formula is satisfied. Therefore, 16 ms is the start time point of the DRX active time. When i=2, b1=3, and b2=3, the foregoing formula is satisfied. Therefore, 33 ms is the start time point of the DRX active time. The rest can be deduced by analogy. Therefore, the start time points of the active times of the DRX are respectively 0 ms, 16 ms, 33 ms, 50 ms, and the like. If a length of the active time configured by the base station is 1 ms, the active times of the DRX are respectively 0 ms to 1 ms, 16 ms to 17 ms, 33 ms to 34 ms, 50 ms to 51 ms, and the like.

For the foregoing example, if f2(b3, b4)=int(i*b3/b4) represents rounding up the result of i*b3/b4, determined start time points of active times of the DRX are respectively 0 ms, 17 ms, 34 ms, 50 ms, and the like. If a length of the active time configured by the base station is 1 ms, the active times of the DRX are respectively 0 ms to 1 ms, 17 ms to 18 ms, 34 ms to 35 ms, 50 ms to 51 ms, and the like.

In another implementation, when the data cycle T is measured in milliseconds (ms), the data cycle T may be replaced with a frame rate of 1000/D, where D (unit: frames/second (FPS)) represents the frame rate of the data. In the foregoing example, if the data cycle T is equal to 16.67 ms, D=60 FPS. b3/b4=T may be replaced with b3/b4=1000/D.

Formula (2) is applicable to that the DRX cycle is a long DRX cycle or a short DRX cycle. In another implementation, the short DRX cycle may be further implemented by using the following formula: (b1*10+b2) modulo b3=(f2(b3, b4)+b5) modulo b3. Meanings of b1, b2, b3, b4, b5, and f2(b3, b4) are the same as meanings of b1, b2, b3, b4, b5, and f2(b3, b4) in Formula (2). For an example of specific values of parameters in the formula, refer to an example of related values in Formula (2). Details are not described again.

Method 3: The start time point of the active time satisfies:

$$(c1*10+c2) \text{ modulo } c3 = f3(T) \text{ modulo } c3 + c5 \qquad \text{Formula (3)}$$

c1 represents a system frame number corresponding to the start time point, c2 represents a subframe number corresponding to the start time point, one system frame includes 10 subframes, and duration of one subframe is 1 ms. f3(T) represents a function related to T, c5 is configured by the base station, and modulo represents a modulo operation. A greatest common divisor of c3 and c4 is 1, and satisfies: c3/c4=T, where both c3 and c4 are positive integers, c3 may represent duration of a DRX cycle, c4 may represent a quantity of configured DRX cycles, and T is the data cycle.

In an implementation, c5 represents drx-StartOffset configured by the base station for the terminal, and drx-StartOffset represents a quantity of offset subframes in the DRX cycle. For details, refer to the foregoing descriptions.

For example, it is assumed that a data cycle T of the XR service is equal to 16.67 ms. In this case, in Formula (3), c3=50, and c4=3. It is assumed that f3(T)=int(i*T), where i represents an ith set of DRX configurations, i is equal to 0, 1, ..., or (c4-1), and int(i*T) represents rounding down a result of i*T. It is assumed that c5=0.

Therefore, Formula (3) is simplified as (c1*10+c2) modulo 50=int(i*16.67) modulo 50.

According to the formula, if a start time point of a subframe in a system frame satisfies the formula, it is determined that the start time point of the subframe is the start time point of the DRX active time. Then, the DRX active time may be determined based on a length of the active time configured by the base station. A subframe number of a subframe is represented by (c1*10+c2). For example, when c1=0 and c2=0, it indicates a subframe whose subframe number is 0; when c1=0 and c2=1, it indicates a subframe whose subframe number is 1; when c1=1 and c2=1, it indicates a subframe whose subframe number is 11; and the rest can be deduced by analogy.

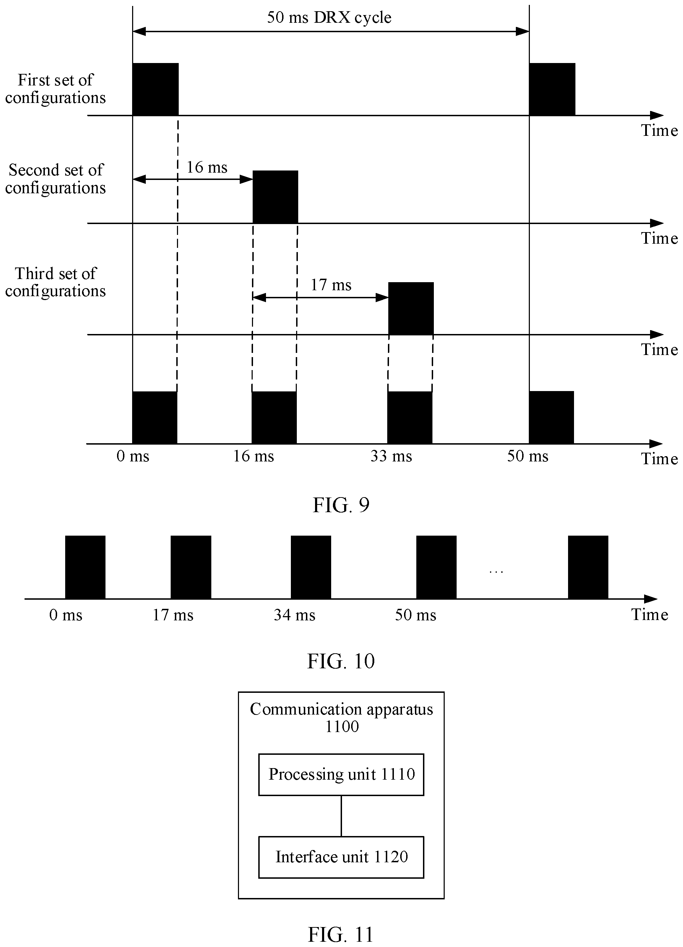

For the foregoing example, an example diagram of a DRX active time shown in FIG. 9 may be obtained. Because c3=50 and c4=3, three sets of DRX configurations are configured, and a DRX cycle is 50 ms. When i=0, c1=0, and c2=0, the foregoing formula is satisfied. Therefore, 0 ms is a start time point of an active time of a first set of DRX. When i=1, c1=1, and c2=6, the foregoing formula is satisfied. Therefore, 16 ms is a start time point of an active time of a second set of DRX. When i=2, c1=3, and c2=3, the foregoing formula is satisfied. Therefore, 33 ms is a start time point of an active time of a third set of DRX. The rest can be deduced by analogy. Therefore, the start time points of the active times of the DRX are respectively 0 ms, 16 ms, 33 ms, 50 ms, and the like. If a length of the active time configured by the base station is 1 ms, the active times of the DRX are respectively 0 ms to 1 ms, 16 ms to 17 ms, 33 ms to 34 ms, 50 ms to 51 ms, and the like. For the foregoing example, if f3(T)=int(i*T) represents rounding up the result of i*T, determined start time points of active times of the DRX are respectively 0 ms, 17 ms, 34 ms, 50 ms, and the like. If a length of the active time configured by the base station is 1 ms, the active times of the DRX are respectively 0 ms to 1 ms, 17 ms to 18 ms, 34 ms to 35 ms, 50 ms to 51 ms, and the like. In another implementation, when the data cycle T is measured in milliseconds (ms), the data cycle T may be replaced with a frame rate of 1000/D, where D (unit: frames/second (FPS)) represents the frame rate of the data. In the foregoing example, if the data cycle T is equal to 16.67 ms, D=60 FPS. f3(T)=int(i*T) may be replaced with f3(T)=int(i*1000/D). c3/c4=T may be replaced with c3/c4=1000/D.

Formula (3) is applicable to that the DRX cycle is a long DRX cycle or a short DRX cycle. In another implementation, the short DRX cycle may be further implemented by using the following formula: (c1*10+c2) modulo c3=(f3(T)+c5) modulo c3. Meanings of c1, c2, c3, f3(T), and c5 are the same as meanings of c1, c2, c3, f3(T), and c5 in Formula (3). For an example of specific values of parameters in the formula, refer to an example of related values in Formula (3). Details are not described again.

Method 4: The start time point of the active time satisfies:

$$\text{int}((d1*10+d2) \text{ modulo } d3) = \text{int}(d4 \text{ modulo } d3) \qquad \text{Formula (4)}$$

d1 represents a system frame number corresponding to the start time point of the active time, d2 represents a subframe number corresponding to the start time point of the active time, one system frame includes 10 subframes, duration of one subframe is 1 ms, d3=T, T is the data cycle, d4 represents drx-StartOffset configured by the base station for a terminal, and drx-StartOffset represents a quantity of offset subframes in a DRX cycle. For details, refer to the foregoing descriptions. modulo represents a modulo operation, int represents a rounding operation, which may be rounding up or rounding down.

For example, it is assumed that a data cycle T of the XR service is equal to 16.67 ms, d4=0, int((d1*10+d2) modulo d3) represents rounding down (d1*10+d2) modulo d3, and int(d4 modulo d3) represents rounding down d4 modulo d3.

Therefore, Formula (4) is simplified as int((d1*10+d2) modulo 16.67)=int(0 modulo 16.67).

According to the formula, if a start time point of a subframe in a system frame satisfies the formula, it is determined that the start time point of the subframe is the start time point of the DRX active time. Then, the DRX active time may be determined based on a length of the active time configured by the base station. A subframe number of a subframe is represented by (a1*10+a2). For example, when a1=0 and a2=0, it indicates a subframe whose subframe number is 0; when a1=0 and a2=1, it indicates a subframe whose subframe number is 1; when a1=1 and a2=1, it indicates a subframe whose subframe number is 11; and the rest can be deduced by analogy.

For the foregoing example, an example diagram of a DRX active time shown in FIG. 10 may be obtained. Start time points of active times of the DRX are respectively 0 ms, 17 ms, 34 ms, 50 ms, and the like. If a length of the active time configured by the base station is 1 ms, the active times of the DRX are respectively 0 ms to 1 ms, 17 ms to 18 ms, 34 ms to 35 ms, 50 ms to 51 ms, and the like.

In the foregoing method, drx-StartOffset, namely, d4, indicates a start time point of an active time in each DRX cycle. To be specific, a time point obtained by offsetting a start time point of each DRX cycle by an offset indicated by drx-StartOffset is used as the start time point of the active time in the DRX cycle. drx-StartOffset is measured in subframes, to be specific, a time point obtained by offsetting based on drx-StartOffset is a start time point of a subframe.

In another possible implementation, a start time point of an active time in each DRX cycle may alternatively be determined based on drx-StartOffset and drx-SlotOffset. To be specific, starting from a start time point of each DRX cycle, offsetting is performed based on the offset indicated by drx-StartOffset to obtain a start time point of a subframe, and then starting from the start time point of the subframe, offsetting is performed based on an offset indicated by drx-SlotOffset to obtain a start time point of a slot (slot) in the subframe or a start time point of a subframe in a previous subframe of the subframe. The start time point of the subframe is the start time point of the DRX active time cycle. drx-StartOffset is measured in subframes, and drx-SlotOffset is measured in slots. Therefore, a time point obtained by offsetting based on drx-StartOffset and drx-SlotOffset is a start time point of a slot in a subframe.

In an implementation, drx-SlotOffset may be obtained through calculation by using the following method:

$$\text{drx-SlotOffset} = \text{int}(((d1*10+d2-d4) \text{ modulo } d3)*d5) \qquad \text{Formula (5)}$$

Meanings of d1, d2, d3, and d4 are the same as meanings of d1, d2, d3, and d4 in Formula (4). d5 represents a quantity of slots in one subframe (namely, 1 ms), and a value of d5 is related to a subcarrier spacing.

In an implementation, the subcarrier spacing is equal to 15 kHz*d5. When the subcarrier spacing is 15 kHz, d5=1; when the subcarrier spacing is 30 kHz, d5=2; when the subcarrier spacing is 60 kHz, d5=4; and the rest can be deduced by analogy.

An example in FIG. 10 is used. Based on the example in FIG. 10, drx-SlotOffset is further introduced. d4=drx-StartOffset=0 and d3=T=16.67 ms. It is assumed that the subcarrier spacing is 30 kHz, that is, d5=2. In this case, Formula (5) is simplified as drx-SlotOffset=int(((d1*10+d2) modulo 16.67)*d5), where it is assumed that int represents rounding down.

When (d1*10+d2)=17 ms, drx-SlotOffset=int((17 modulo 16.67)*2)=0. Therefore, 0 slots are moved forward on the basis of 17 ms (namely, a slot 34), that is, a 34$^{th}$ slot is the start time point of the active time.

When (d1*10+d2)=34 ms, drx-SlotOffset=int((34 modulo 16.67)*2)=1. Therefore, one slot is moved forward on the basis of 34 ms (namely, a slot 68), that is, a 67$^{th}$ slot is the start time point of the active time.

When (d1*10+d2)=50 ms, drx-SlotOffset=int((50 modulo 16.67)*2)=0. Therefore, 0 slots are moved forward on the basis of 50 ms (namely, a slot 100), that is, a 100$^{th}$ slot is the start time point of the active time.

Therefore, in the foregoing example, the start time points of the active times of the DRX are respectively a slot 0, the slot 34, a slot 67, the slot 100, and the like. If a length of the active time configured by the base station is 1 ms (namely, two slots), the active times of the DRX are respectively: the slot 0 to a slot 2, the slot 34 to a slot 36, the slot 67 to a slot 69, the slot 100 to a slot 102, and the like.

In another implementation, when the data cycle T is measured in milliseconds (ms), the data cycle T may be replaced with a frame rate of 1000/D, and d3 may also be replaced with 1000/D, where D (unit: frames/second (FPS)) represents the frame rate of the data. In the foregoing example, if the data cycle T is equal to 16.67 ms, D=60 FPS. d3=T may be replaced with d3=1000/D.

For example, when d3 may be replaced with 1000/D, Formula (4) may be expressed as int((d1*10+d2) modulo (1000/D))=int(d4 modulo (1000/D)).

For example, when d3 may be replaced with 1000/D, Formula (4) may be expressed as int((d1*10+d2)*D modulo 1000)=int(d4*D modulo (1000)).

Formula (4) is applicable to that the DRX cycle is a long DRX cycle or a short DRX cycle. In another implementation, the long DRX cycle may be further implemented by using the following formula: int((d1*10+d2) modulo d3)=int(d4). Meanings of d1, d2, d3, d4, and int(d4) are the same as meanings of d1, d2, d3, d4, and int(d4) in Formula (4).

For an example of specific values of parameters in the formula, refer to an example of related values in Formula (4). Details are not described again.

Method 5: The start time point of the active time satisfies:

$$\text{int}(((e1*10+e2)*e3+e4) \text{ modulo } e5)=\text{int}((e6*e3+e7) \text{ modulo } e5) \qquad \text{Formula (6)}$$

e1 represents a system frame number corresponding to the start time point of the active time, e2 represents a subframe number corresponding to the start time point of the active time, one system frame includes 10 subframes, duration of one subframe is 1 ms, e3 represents a quantity of slots included in one subframe, and e3 is d5 in Method 4. For a specific calculation method, refer to the foregoing descriptions. e4 represents an e4$^{th}$ slot in one subframe. e5=T*e3, where T is the data cycle. e6 represents drx-StartOffset configured by the base station for the terminal, and drx-StartOffset represents a quantity of offset subframes in a DRX cycle. e7 represents drx-SlotOffset configured by the base station for the terminal, and drx-SlotOffset represents a quantity of offset slots in one subframe. (e6*e3+e7) represents a total quantity of offset slots starting from a start position of the DRX cycle, modulo represents a modulo operation, int represents a rounding operation, which may be rounding up or rounding down.

For example, it is assumed that a data cycle T of the XR service is equal to 16.67 ms, e3=2, e5=16.67*2=33.34, e6=3, e7=1, and int represents rounding down. Therefore, Formula (6) is simplified as int(((e1*10+e2)*e3+e4) modulo 33.34)=int(7 modulo 33.34)=7.

According to the formula, it may be learned that when (e1*10+e2)*e3+e4) is equal to 7, 41, 74, 107, and the like, the left part and the right part of the formula are equal. Therefore, start time points of active times of the DRX are respectively: a slot 7, a slot 41, a slot 74, a slot 107, and the like. If a length of the active time configured by the base station is two slots, the active times of the DRX are respectively: the slot 7 to a slot 9, the slot 41 to a slot 43, the slot 74 to a slot 76, the slot 107 to a slot 109, and the like.

In another implementation, when the data cycle T is measured in milliseconds (ms), the data cycle T may be replaced with a frame rate of 1000/D, and e5 may be replaced with 1000/D*e3, where D (unit: frames/second (FPS)) represents the frame rate of the data. In the foregoing example, if the data cycle T is equal to 16.67 ms, D=60 FPS.

Method 6: The start time point of the active time satisfies:

$$f1*f2+f3=\text{int}[(f4+i*f5)*f2/10] \text{ modulo } (1024*f2) \qquad \text{Formula (7)}$$

f1 represents a system frame number corresponding to the start time point, f2 represents a quantity of slots included in each system frame, f3 represents a slot number corresponding to the start time point of the active time, namely, a specific slot in the system frame, f4 represents drx-StartOffset configured by the base station for the terminal, drx-StartOffset represents a quantity of offset subframes in a DRX cycle, where for details, refer to the foregoing descriptions, f5 represents duration of the DRX cycle, f5=T, and T is the data cycle. i represents an i$^{th}$ DRX cycle or the DRX active time. modulo represents a modulo operation, int represents a rounding operation, which may be rounding up or rounding down.

For example, it is assumed that a data cycle T of the XR service is equal to 16.67 ms, f4=0, and int represents rounding down. Therefore, Formula (6) is simplified as f1*f2+f3=int[i* 16.67*f2/10] modulo (1024*f2).

Assuming that a subcarrier spacing is 30 kHz, f2=20, and assuming that a service arrives in a slot 0 with a system frame number 0, according to the formula, if a start time point of a slot in a system frame satisfies the formula, it is determined that the start time point of the slot is the start time point of the DRX active time. Then, the DRX active time may be determined based on a length of the active time configured by the base station. For this example, start time points of active times of the DRX are respectively: the slot 0, a slot 34, a slot 67, a slot 100, and the like. If the length of the active time configured by the base station is 1 ms (namely, two slots), the active times of the DRX are respectively: a slot 0 to a slot 2, a slot 34 to a slot 36, a slot 67 to a slot 69, a slot 100 to a slot 102, and the like.

In another implementation, when the data cycle T is measured in milliseconds (ms), the data cycle T may be replaced with a frame rate of 1000/D, where D (unit: frames/second (FPS)) represents the frame rate of the data. In the foregoing example, if the data cycle T is equal to 16.67 ms, D=60 FPS. f5=T may be replaced with f5=1000/D.

Method 7: The start time point of the active time satisfies:

$$(g1*g2*g3)+(g4*g3)+g5=\text{int}[(g6*g2*g3+g7*g3+g8)+i*g9] \text{ modulo } (1024*g2*g3)$$

$$\text{Formula (8)}$$

g1 represents a system frame number corresponding to the start time point, g2 represents a quantity of slots included in each system frame, g3 represents a quantity of symbols included in each slot, g4 represents a subframe number corresponding to the start time point, g5 represents a number of a symbol corresponding to the start time point, g6 represents drx-StartOffset configured by the base station for the terminal, drx-StartOffset represents a quantity of offset subframes in a DRX cycle, g7 represents drx-SlotOffset configured by the base station for the terminal, drx-SlotOffset represents a quantity of offset slots in the DRX cycle, g8 represents drx-SymbolOffset configured by the base station for the terminal, and drx-SymbolOffset represents a quantity of offset symbols in the DRX cycle. g9 represents duration of the DRX cycle, g9=T, and T is the data cycle. i represents an $i^{th}$ DRX cycle or the DRX active time. modulo represents a modulo operation, int represents a rounding operation, which may be rounding up or rounding down.

In an implementation, when the data cycle T is measured in milliseconds (ms), the data cycle T may be replaced with a frame rate of 1000/D, where D (unit: frames/second (FPS)) represents the frame rate of the data.

Method 8: The start time point of the active time satisfies:

$$h1*10+h2=int[(h3+i*h4)] \bmod (1024*10)$$

h1 represents a system frame number corresponding to the start time point, h2 represents a slot number corresponding to the start time point, h3 represents drx-StartOffset configured by the base station for the terminal, drx-StartOffset represents a quantity of offset subframes in a DRX cycle, h4 represents duration of the DRX cycle, h4=T, T is a data cycle, i represents an $i^{th}$ DRX cycle or the DRX active time, modulo represents a modulo operation, and int represents a rounding operation, which may be rounding up or rounding down.

In an implementation, when the data cycle T is measured in milliseconds (ms), the data cycle T may be replaced with a frame rate of 1000/D, where D (unit: frames/second (FPS)) represents the frame rate of the data.

In this embodiment of this application, the base station may configure, by using DRX-Config, the terminal to determine the DRX active time according to the method shown in FIG. 6. The following provides five possible implementations of DRX-Config.

Implementation A: Add fields tailored for XR and INTEGER (0..int(T)-1) to drx-LongCycleStartOffset of DRX-Config.

The name tailored for XR herein is merely an example. During actual application, the name may be replaced with another name. This is not limited in this application.

Tailored for XR is a specific implementation of the configuration information described in step 601, and is used to configure that the start time point of the DRX active time is determined based on the data cycle. Tailored for XR may have a specific value, for example, 0, 1, a Boolean value, or an enumerated value. This is not limited in this application.

INTEGER (0..int(T)-1) represents an integer ranging from 0 to int(T)-1. int(T) represents a rounding operation on the data cycle T. When Method 1 is used, INTEGER (0..int(T)-1) is used to configure a5 in Formula (1), that is, a5 is configured as a value among 0, 1, 2, ..., and int(T)-1. When Method 2 is used, INTEGER (0..int(T)-1) is used to configure b5 in Formula (2), that is, b5 is configured as a value among 0, 1, 2, ..., and int(T)-1. When Method 3 is used, INTEGER (0..int(T)-1) is used to configure c5 in Formula (3), that is, c5 is configured as a value among 0, 1, 2, ..., and int(T)-1. It may be learned from the implementation that, value ranges of a5, b5, and c5 may be related to the data cycle T.

The following example is a pseudocode representation form of DRX-Config in the implementation A:

```
DRX-Config::=SEQUENCE {
drx-onDurationTimerCHOICE {
subMilliSecondsINTEGER (1..31),
milliSecondsENUMERATED {
        ms1, ms2, ms3, ms4, ms5, ms6, ms8, ms10, ms20, ms30, ms40, ms50, ms60,
        ms80, ms100, ms200, ms300, ms400, ms500, ms600, ms800, ms1000, ms1200,
        ms1600, spare8, spare7, spare6, spare5, spare4, spare3, spare2, spare1}
    },
drx-LongCycleStartOffsetCHOICE {
        ms10            INTEGER (0..9),
        ms20            INTEGER (0..19),
         ms32            INTEGER (0..31),
```

```
              ms40              INTEGER (0..39),

              ms60              INTEGER (0..59),

              ms64              INTEGER (0..63),

              ms70              INTEGER (0..69),

              ms80              INTEGER (0..79),

              ms128             INTEGER (0..127),

              ms160             INTEGER (0..159),

              ms256             INTEGER (0..255),

              ms320             INTEGER (0..319),

              ms512             INTEGER (0..511),

              ms640             INTEGER (0..639),

              ms1024            INTEGER (0..1023),

              ms1280            INTEGER (0..1279),

              ms2048            INTEGER (0..2047),

              ms2560            INTEGER (0..2559),

              ms5120            INTEGER (0..5119),

              ms10240           INTEGER (0..10239)

          tailored for XR       INTEGER (0..int(T)–1)

      },

   drx-SlotOffsetINTEGER (0..31)

   }
```

Implementation B: Add a plurality of groups of fields to drx-LongCycleStartOffset of DRX-Config, where one group of fields includes tailored for XR and INTEGER (0..int(T)-1). Tailored for XR is used to configure that the start time point of the DRX active time is determined based on the data cycle, and indicates the data cycle.

INTEGER (0..int(T)-1) represents an integer ranging from 0 to int(T)-1. int(T) represents a rounding operation on the data cycle T. When Method 1 is used, INTEGER (0..int(T)-1) is used to configure a5 in Formula (1), that is, a5 is configured as a value among 0, 1, 2, ..., and int(T)-1. When Method 2 is used, INTEGER (0..int(T)-1) is used to configure b5 in Formula (2), that is, b5 is configured as a value among 0, 1, 2, ..., and int(T)-1. When Method 3 is used, INTEGER (0..int(T)-1) is used to configure c5 in Formula (3), that is, c5 is configured as a value among 0, 1, 2, ..., and int(T)-1. It may be learned from the implementation that, value ranges of a5, b5, and c5 may be related to the data cycle T.

The following example is an example of a pseudocode representation form of DRX-Config in the implementation B:

```
DRX-Config::=SEQUENCE {
drx-onDurationTimerCHOICE {
subMilliSecondsINTEGER (1..31),
milliSecondsENUMERATED {
        ms1, ms2, ms3, ms4, ms5, ms6, ms8, ms10, ms20, ms30, ms40, ms50, ms60,
        ms80, ms100, ms200, ms300, ms400, ms500, ms600, ms800, ms1000, ms1200,
        ms1600, spare8, spare7, spare6, spare5, spare4, spare3, spare2, spare1}
        },
drx-LongCycleStartOffsetCHOICE {
        ms10            INTEGER (0..9),
        ms20            INTEGER (0..19),
         ms32            INTEGER (0..31),
        ms40            INTEGER (0..39),
        ms60            INTEGER (0..59),
        ms64            INTEGER (0..63),
        ms70            INTEGER (0..69),
        ms80            INTEGER (0..79),
        ms128            INTEGER (0..127),
        ms160            INTEGER (0..159),
        ms256            INTEGER (0..255),
        ms320            INTEGER (0..319),
        ms512            INTEGER (0..511),
        ms640            INTEGER (0..639),
        ms1024            INTEGER (0..1023),
        ms1280            INTEGER (0..1279),
        ms2048            INTEGER (0..2047),
        ms2560            INTEGER (0..2559),
        ms5120            INTEGER (0..5119),
        ms10240            INTEGER (0..10239)
        tailored for XR(T1)    INTEGER (0..int(T1)–1)
        tailored for XR(T2) INTEGER (0..int(T2)–1)
        tailored for XR(T3) INTEGER (0..int(T3)–1)
        },
```

drx-SlotOffsetINTEGER (0..31)

}

In this example, three groups of fields are added to drx-LongCycleStartOffset.

A first group of fields includes tailored for XR(T1) and INTEGER (0..int(T1)-1). Tailored for XR(T1) is used to configure that the start time point of the DRX active time of the terminal is determined based on the data cycle, and indicates that the data cycle is T1. INTEGER (0..int(T1)-1) represents an integer ranging from 0 to int(T1)-1.

A second group of fields includes tailored for XR(T2) and INTEGER (0..int(T2)-1). Tailored for XR(T2) is used to configure that the start time point of the DRX active time of the terminal is determined based on the data cycle, and indicates that the data cycle is T2. INTEGER (0..int(T2)-1) represents an integer ranging from 0 to int(T2)-1.

A third group of fields includes tailored for XR(T3) and INTEGER (0..int(T3)-1). Tailored for XR(T3) is used to configure that the start time point of the DRX active time of the terminal is determined based on the data cycle, and indicates that the data cycle is T3. INTEGER (0..int(T3)-1) represents an integer ranging from 0 to int(T3)-1.

In a specific example, a value of tailored for XR(T1) is 0, a value of tailored for XR(T2) is 1, and a value of tailored for XR(T3) is 2.

Implementation C: Add tailored for XR and INTEGER (0..int(T)-1) to drx-LongCycleStartOffset of DRX-Config, and add a Cycle-Information field to DRX-Config.

Tailored for XR is used to configure that the start time point of the DRX active time is determined based on the data cycle.

INTEGER (0..int(T)-1) represents an integer ranging from 0 to int(T)-1. int(T) represents a rounding operation on the data cycle T. When Method 1 is used, INTEGER (0..int(T)-1) is used to configure a5 in Formula (1), that is, a5 is configured as a value among 0, 1, 2, ..., and int(T)-1. When Method 2 is used, INTEGER (0..int(T)-1) is used to configure b5 in Formula (2), that is, b5 is configured as a value among 0, 1, 2, ..., and int(T)-1. When Method 3 is used, INTEGER (0..int(T)-1) is used to configure c5 in Formula (3), that is, c5 is configured as a value among 0, 1, 2, ..., and int(T)-1. It may be learned from the implementation that, value ranges of a5, b5, and c5 may be related to the data cycle T.

The Cycle-Information field indicates the data cycle.

The following example is an example of a pseudocode representation form of DRX-Config in the implementation C:

DRX-Config::=SEQUENCE {

drx-onDurationTimerCHOICE {

subMilliSecondsINTEGER (1..31),

milliSecondsENUMERATED {

    ms1, ms2, ms3, ms4, ms5, ms6, ms8, ms10, ms20, ms30, ms40, ms50, ms60,

    ms80, ms100, ms200, ms300, ms400, ms500, ms600, ms800, ms1000, ms1200,

    ms1600, spare8, spare7, spare6, spare5, spare4, spare3, spare2, spare1}

    },

drx-LongCycleStartOffsetCHOICE {

| | |
|---|---|
| ms10 | INTEGER (0..9), |
| ms20 | INTEGER (0..19), |
| ms32 | INTEGER (0..31), |
| ms40 | INTEGER (0..39), |
| ms60 | INTEGER (0..59), |
| ms64 | INTEGER (0..63), |
| ms70 | INTEGER (0..69), |
| ms80 | INTEGER (0..79), |
| ms128 | INTEGER (0..127), |
| ms160 | INTEGER (0..159), |
| ms256 | INTEGER (0..255), |
| ms320 | INTEGER (0..319), |
| ms512 | INTEGER (0..511), |
| ms640 | INTEGER (0..639), |
| ms1024 | INTEGER (0..1023), |
| ms1280 | INTEGER (0..1279), |
| ms2048 | INTEGER (0..2047), |
| ms2560 | INTEGER (0..2559), |
| ms5120 | INTEGER (0..5119), |
| ms10240 | INTEGER (0..10239) |
| tailored for XR | INTEGER (0..int(T)−1) |

    },

    FPS-Information    INTEGER (0..256)

    Or    Cycle-InformationENUMERATED    {onehundredthird,    fiftythird, onehundredninth, twentyfivethird}

drx-SlotOffsetINTEGER (0..31)

    }

In the foregoing implementation A, implementation B, and implementation C, existing DRX-Config is reused, so that the start time point of the DRX active time of the terminal is determined based on the data cycle. This can reduce signaling overheads, and help improve performance.

In the foregoing implementation A, implementation B, and implementation C, parameters of the DRX are configured by using the data cycle T as an example. When the parameters of the DRX are configured based on the frame rate D of the data, the data cycle T in the foregoing implementation A, implementation B, and implementation C is replaced with 1000/D, and the Cycle-Information field is replaced with an FPS-Information field indicating the frame rate of the data. Specifically, int(T) is replaced with int(1000/D), int(T1) is replaced with int(1000/D1), int(T2) is replaced with int(1000/D2), int(T3) is replaced with int(1000/D3), tailored for XR(T1) is replaced with tailored for XR(D1), tailored for XR(T2) is replaced with tailored for XR(D2), and tailored for XR(T3) is replaced with tailored for XR(D3), where T=1000/D, T1=1000/D1, T2=1000/D2, and T3=1000/D3.

Implementation D: Add a drx-FPSStartOffset field to DRX-Config, where the field includes two pieces of parameter information: the frame rate (represented by D) of the data with a value range from 0 to 1023, and the quantity of offset subframes in the DRX cycle with a value range from 0 to int(1000/D)-1. After parameters of the drx-FPSStartOffset field are configured, the original drx-LongCycleStartOffset field is no longer used for calculation of a start position of the DRX.

The name of drx-FPSStartOffset herein is merely an example. During actual application, the name may be replaced with another name. The name is not limited in this application. drx-FPSStartOffset is a specific implementation of the configuration information described in step 601, and is used to configure that the start time point of the DRX active time is determined based on the cycle (or the frame rate) of the data.

INTEGER (0..int(1000/D)-1) represents an integer ranging from 0 to int(1000/D)-1. int(1000/D) represents a rounding operation on the frame rate D of the data. The implementation D may be combined with Method 4, and INTEGER (0..int(1000/D)-1) is used to configure d3 and d4 in Formula (4).

The following example is a pseudocode representation form of DRX-Config in the implementation D:

DRX-Config::=SEQUENCE {

drx-onDurationTimerCHOICE {

subMilliSecondsINTEGER (1..31),

milliSecondsENUMERATED {

ms1, ms2, ms3, ms4, ms5, ms6, ms8, ms10, ms20, ms30, ms40, ms50, ms60,

```
        ms80, ms100, ms200, ms300, ms400, ms500, ms600, ms800, ms1000, ms1200,

        ms1600, spare8, spare7, spare6, spare5, spare4, spare3, spare2, spare1}

            },

    drx-LongCycleStartOffsetCHOICE {

            ms10              INTEGER (0..9),

            ms20              INTEGER (0..19),

             ms32              INTEGER (0..31),

            ms40              INTEGER (0..39),

            ms60              INTEGER (0..59),

            ms64              INTEGER (0..63),

            ms70              INTEGER (0..69),

            ms80              INTEGER (0..79),

            ms128             INTEGER (0..127),

            ms160             INTEGER (0..159),

            ms256             INTEGER (0..255),

            ms320             INTEGER (0..319),

            ms512             INTEGER (0..511),

            ms640             INTEGER (0..639),

            ms1024            INTEGER (0..1023),

            ms1280            INTEGER (0..1279),

            ms2048            INTEGER (0..2047),

            ms2560            INTEGER (0..2559),

            ms5120            INTEGER (0..5119),

            ms10240           INTEGER (0..10239)

        },

    drx-FPSStartOffset    INTEGER (0..1023) INTEGER (0..int(1000/D)−1),

    }
```

The drx-FPSStartOffset field in the implementation D may be split into two fields: a drx-FPS field and a drx-StartOffset field. The drx-FPS field represents the frame rate of the data, and drx-StartOffset represents the quantity of offset subframes in the DRX cycle.

Implementation E: Add an ms-Cycle field and a quantity of offset subframes in a corresponding DRX cycle to DRX-Config, where a value range of the quantity of offset subframes in the DRX cycle is 0 to int(T)-1. After the ms-Cycle field and the quantity of offset subframes in the corresponding DRX cycle are configured, the original drx-LongCycleStartOffset field is no longer used for calculation of a start position of the DRX.

The name of ms-Cycle herein is merely an example. During actual application, the name may be replaced with another name. The name is not limited in this application.

ms-Cycle is a specific implementation of the configuration information described in step 601, and is used to configure that the start time point of the DRX active time is determined based on the cycle (or the frame rate) of data.

INTEGER (0..int(T)-1) represents an integer ranging from 0 to int(T)-1. int(T) represents a rounding operation on the data cycle T. The implementation E may be combined with Method 4. The ms-Cycle field is used to configure d3 in Formula (4), and INTEGER (0..int(T)-1) is used to configure d4 in Formula (4).

The following example is a pseudocode representation form of DRX-Config in the implementation E:

```
DRX-Config::=SEQUENCE {

drx-onDurationTimerCHOICE {

subMilliSecondsINTEGER (1..31),

milliSecondsENUMERATED {

        ms1, ms2, ms3, ms4, ms5, ms6, ms8, ms10, ms20, ms30, ms40, ms50, ms60,

        ms80, ms100, ms200, ms300, ms400, ms500, ms600, ms800, ms1000, ms1200,

        ms1600, spare8, spare7, spare6, spare5, spare4, spare3, spare2, spare1}

        },

drx-LongCycleStartOffsetCHOICE {

        ms10            INTEGER (0..9),

        ms20            INTEGER (0..19),

         ms32              INTEGER (0..31),

        ms40            INTEGER (0..39),

        ms60            INTEGER (0..59),

        ms64            INTEGER (0..63),

        ms70            INTEGER (0..69),

        ms80            INTEGER (0..79),

        ms128             INTEGER (0..127),

        ms160             INTEGER (0..159),

        ms256             INTEGER (0..255),

        ms320             INTEGER (0..319),

        ms512             INTEGER (0..511),
```

```
            ms640              INTEGER (0..639),

            ms1024               INTEGER (0..1023),

            ms1280               INTEGER (0..1279),

            ms2048               INTEGER (0..2047),

            ms2560               INTEGER (0..2559),

            ms5120               INTEGER (0..5119),

            ms10240             INTEGER (0..10239)

        },

    drx-LongCycleStartOffset-R18 {

    msonehundredthirdINTEGER (0..33),

        msfiftythird            INTEGER (0..16),

        msonehundredninthINTEGER (0..9),

        mstwentyfivethirdINTEGER (0..8),

        },

    }
```

msonehundredthird, msfiftythird, msonehundredninth and mstwentyfivethird are specific examples of ms-Cycle.

It should be noted that, for Method 5 to Method 7, the configuration information described in step 601 may alternatively be configured in a pseudocode form similar to that in the foregoing implementation D or implementation E. Details are not described again.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

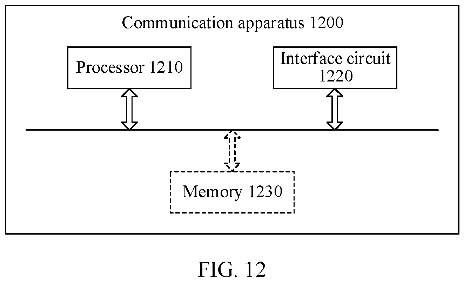

FIG. 11 and FIG. 12 each are a diagram of a possible structure of a communication apparatus according to an embodiment of this application. These communication apparatuses may be configured to implement the functions of the terminal or the base station in the foregoing method embodiment, and therefore can also achieve beneficial effects of the foregoing method embodiment. In this embodiment of this application, the communication apparatus may be one of the terminals 120a to 120j shown in FIG. 1, or may be the base station 110a or 110b shown in FIG.

1, or may be a module (such as a chip) used in the terminal or the base station.

As shown in FIG. 11, the communication apparatus 1100 includes a processing unit 1110 and an interface unit 1120. The communication apparatus 1100 is configured to implement the functions of the terminal or the base station in the foregoing method embodiments.

When the communication apparatus 1100 is configured to implement the functions of the terminal in the foregoing method embodiment, the processing unit 1110 is configured to determine a DRX active time, where a start time point of the active time is related to a data cycle; and the processing unit 1110 is further configured to control the communication apparatus 1100 to monitor a PDCCH in the DRX active time.

In a possible implementation, the interface unit 1120 is configured to receive configuration information from a radio access network device; and the processing unit 1110 is specifically configured to determine the DRX active time based on the configuration information and the data cycle.

In a possible implementation, the start time point of the active time satisfies:

$$(a1*10+a2) \text{ modulo } a3 = f1(a4) \text{ modulo } a3 + a5;$$

or

$$(a1*10+a2) \text{ modulo } a3=(f1(a4)+a5) \text{ modulo } a3$$

a1 represents a system frame number corresponding to the start time point, a2 represents a subframe number corresponding to the start time point, f1(a4) represents a function related to a4, a5 is configured by the radio access network device, and modulo represents a modulo operation; and

a3 and a4 satisfy: a3=int(T), and a4=T-int(T), where int represents a rounding operation, and T is the data cycle.

In a possible implementation, the start time point of the active time satisfies:

$$(b1*10+b2) \text{ modulo } b3=f2(b3, b4) \text{ modulo } b3+b5;$$

or

$$(b1*10+b2) \text{ modulo } b3=(f2(b3, b4)+b5) \text{ modulo } b3$$

b 1 represents a system frame number corresponding to the start time point, b2 represents a subframe number corresponding to the start time point, f2(b3, b4) represents a function related to b3 and b4, b5 is configured by the radio access network device, and modulo represents a modulo operation; and

a greatest common divisor of b3 and b4 is 1, and satisfies: b3/b4=T, where both b3 and b4 are positive integers, and T is the data cycle.

In a possible implementation, the start time point of the active time satisfies:

$$(c1*10+c2) \text{ modulo } c3=f3(T) \text{ modulo } c3+c5;$$

or

$$(c1*10+c2) \text{ modulo } c3=(f3(T)+c5) \text{ modulo } c3$$

c1 represents a system frame number corresponding to the start time point, c2 represents a subframe number corresponding to the start time point, f3(T) represents a function related to T, c5 is configured by the radio access network device, and modulo represents a modulo operation; and

a greatest common divisor of c3 and c4 is 1, and satisfies: c3/c4=T, where both c3 and c4 are positive integers, and T is the data cycle.

In a possible implementation, the start time point of the active time satisfies:

$$int((d1*10+d2) \text{ modulo } d3)=int(d4 \text{ modulo } d3);$$

or

$$int((d1*10+d2) \text{ modulo } d3)=int(d4)$$

d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

In a possible implementation, the start time point of the active time is further related to a quantity of offset slots in the DRX cycle, and the quantity of offset slots in the DRX cycle is equal to int(((d1*10+d2-d4) modulo d3)*d5).

d5 represents a quantity of slots in one subframe.

In a possible implementation, the start time point of the active time satisfies:

$$int(((e1*10+e2)*e3+e4) \text{ modulo } e5)=int((e6*e3+e7) \text{ modulo } e5)$$

e1 represents a system frame number corresponding to the start time point, e2 represents a subframe number corresponding to the start time point, e3 represents a quantity of slots included in one subframe, e4 represents an $e4^{th}$ slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation. In a possible implementation, the start time point of the active time satisfies:

$$f1*f2+f3=int[(f4+i*f5)*f2/10] \text{ modulo } (1024*f2)$$

f1 represents a system frame number corresponding to the start time point, f2 represents a quantity of slots included in one system frame, f3 represents a slot number corresponding to the start time point, f4 represents a quantity of offset subframes in a DRX cycle, f5 represents duration of the DRX cycle, f5=T, T is the data cycle, i represents an $i^{th}$ DRX cycle or the DRX active time, modulo represents a modulo operation, and int represents a rounding operation.

In a possible implementation, the start time point of the active time satisfies:

$$(g1*g2*g3)+(g4*g3)+g5=int[(g6*g2*g3+g7*g3+g8)+i*g9] \text{ modulo } (1024*g2*g3)$$

g1 represents a system frame number corresponding to the start time point, g2 represents a quantity of slots included in one system frame, g3 represents a quantity of symbols included in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an $i^{th}$ DRX cycle or the DRX active time, modulo represents a modulo operation, and int represents a rounding operation.

In a possible implementation, the start time point of the active time satisfies:

$$h1*10+h2=int[(h3+i*h4)] \text{ modulo } (1024*10)$$

h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an $i^{th}$ DRX cycle or the DRX active time, modulo represents a modulo operation, and int represents a rounding operation.

In a possible implementation, the data cycle is configured by the radio access network device.

In a possible implementation, the PDCCH carries information used to schedule the data.

In a possible implementation, the data cycle T is a non-integer.

When the communication apparatus 1100 is configured to implement a function of the radio access network device in the foregoing method embodiment, the processing unit 1110 is configured to control the interface unit 1120 to send configuration information to a terminal, where the configuration information is used to configure that a start time point of a DRX active time is determined based on a data cycle.

In a possible implementation, the interface unit 1120 is further configured to send control information to the terminal on a physical downlink control channel PDCCH in the DRX active time.

In a possible implementation, the control information is used to schedule the data.

In a possible implementation, the start time point of the active time satisfies:

$$(a1*10+a2) \text{ modulo } a3=f1(a4) \text{ modulo } a3+a5;$$

or

$$(a1*10+a2) \text{ modulo } a3=(f1(a4)+a5) \text{ modulo } a3$$

a1 represents a system frame number corresponding to the start time point, a2 represents a subframe number corresponding to the start time point, f1(a4) represents a function related to a4, a5 is configured by the radio access network device, and modulo represents a modulo operation; and
a3 and a4 satisfy:
a3=int(T), and a4=T-int(T), where int represents a rounding operation, and T is the data cycle.

In a possible implementation, the start time point of the active time satisfies:

$$(b1*10+b2) \text{ modulo } b3=f2(b3, b4) \text{ modulo } b3+b5;$$

or

$$(b1*10+b2)\ modulo\ b3=(f2(b3,\ b4)+b5)\ modulo\ b3$$

b 1 represents a system frame number corresponding to the start time point, b2 represents a subframe number corresponding to the start time point, f2(b3, b4) represents a function related to b3 and b4, b5 is configured by the radio access network device, and modulo represents a modulo operation; and
a greatest common divisor of b3 and b4 is 1, and satisfies: b3/b4=T, where both b3 and b4 are positive integers, and T is the data cycle.

In a possible implementation, the start time point of the active time satisfies:

$$(c1*10+c2)\ modulo\ c3=f3(T)\ modulo\ c3+c5;$$

or

$$(c1*10+c2)\ modulo\ c3=(f3(T)+c5)\ modulo\ c3.$$

c1 represents a system frame number corresponding to the start time point, c2 represents a subframe number corresponding to the start time point, f3(T) represents a function related to T, c5 is configured by the radio access network device, and modulo represents a modulo operation; and
a greatest common divisor of c3 and c4 is 1, and satisfies: c3/c4=T, where both c3 and c4 are positive integers, and T is the data cycle.

In a possible implementation, the start time point of the active time satisfies:

$$int((d1*10+d2)\ modulo\ d3)=int(d4\ modulo\ d3);$$

or

$$int((d1*10+d2)\ modulo\ d3)=int(d4)$$

d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

In a possible implementation, the start time point of the active time is further related to a quantity of offset slots in the DRX cycle, and the quantity of offset slots in the DRX cycle is equal to int(((d1*10+d2-d4) modulo d3)*d5).
d5 represents a quantity of slots in one subframe.

In a possible implementation, the start time point of the active time satisfies:

$$int(((e1*10+e2)*e3+e4)\ modulo\ e5)=int((e6*e3+e7)\ modulo\ e5)$$

e1 represents a system frame number corresponding to the start time point, e2 represents a subframe number corresponding to the start time point, e3 represents a quantity of slots included

in one subframe, e4 represents an e4[th] slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation. In a possible implementation, the start time point of the active time satisfies:

$$f1*f2+f3=int[(f4+i*f5)*f2/10]\ modulo\ (1024*f2)$$

f1 represents a system frame number corresponding to the start time point, f2 represents a quantity of slots included in one system frame, f3 represents a slot number corresponding to the start time point, f4 represents a quantity of offset subframes in a DRX cycle, f5 represents duration of the DRX cycle, f5=T, T is the data cycle, i represents an ith DRX cycle or the DRX active time, modulo represents a modulo operation, and int represents a rounding operation.

In a possible implementation, the start time point of the active time satisfies:

$$(g1*g2*g3)+(g4*g3)+g5=int[(g6*g2*g3+g7*g3+g8)+i*g9] \text{ modulo } (1024*g2*g3)$$

g1 represents a system frame number corresponding to the start time point, g2 represents a quantity of slots included in one system frame, g3 represents a quantity of symbols included in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an $i^{th}$ DRX cycle or the DRX active time, modulo represents a modulo operation, and int represents a rounding operation.

In a possible implementation, the start time point of the active time satisfies:

$$h1*10+h2=int[(h3+i*h4)] \text{ modulo } (1024*10)$$

h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an $i^{th}$ DRX cycle or the DRX active time, modulo represents a modulo operation, and int represents a rounding operation.

In a possible implementation, the configuration information is further used to configure the data cycle.

In a possible implementation, the interface unit 1120 is further configured to send, to the terminal, information used to configure the data cycle.

In a possible implementation, the data cycle T is a non-integer.

For more detailed descriptions about the processing unit 1110 and the interface unit 1120, directly refer to related descriptions in the foregoing method embodiments. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, or store input data required by the processor 1210 to run the instructions, or store data generated after the processor 1210 runs the instructions. When the communication apparatus 1200 is configured to implement the foregoing method embodiments, the processor 1210 is configured to implement a function of the processing unit 1110, and the interface circuit 1220 is configured to implement a function of the interface unit 1120.

When the foregoing communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the foregoing communication apparatus is a module used in a base station, the module in the base station implements a function of the base station in the foregoing method embodiment. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact optical disk read- only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a base station, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1.  A communication method, comprising:

    determining a discontinuous reception DRX active time, wherein a start time point of the active time is related to a data cycle; and
    monitoring a physical downlink control channel PDCCH in the DRX active time.

2.  The method according to claim 1, further comprising:

    receiving configuration information from a radio access network device; and
    the determining a DRX active time comprises:
    determining the DRX active time based on the configuration information and the data cycle.

3.  The method according to claim 1 or 2, wherein the start time point of the active time satisfies:

$$(a1*10+a2) \text{ modulo } a3 = f1(a4) \text{ modulo } a3 + a5;$$

    or

$$(a1*10+a2) \text{ modulo } a3 = (f1(a4)+a5) \text{ modulo } a3, \text{ wherein}$$

a1 represents a system frame number corresponding to the start time point, a2 represents a subframe number corresponding to the start time point, f1(a4) represents a function related to a4, a5 is configured by the radio access network device, and modulo represents a modulo operation; and

a3 and a4 satisfy: a3=int(T), and a4=T-int(T), wherein int represents a rounding operation, and T is the data cycle.

4. The method according to claim 1 or 2, wherein the start time point of the active time satisfies:

$$(b1*10+b2) \text{ modulo } b3=f2(b3, b4) \text{ modulo } b3+b5;$$

or

$$(b1*10+b2) \text{ modulo } b3=(f2(b3, b4)+b5) \text{ modulo } b3,$$

wherein

b1 represents a system frame number corresponding to the start time point, b2 represents a subframe number corresponding to the start time point, f2(b3, b4) represents a function related to b3 and b4, b5 is configured by the radio access network device, and modulo represents a modulo operation; and

a greatest common divisor of b3 and b4 is 1, and satisfies: b3/b4=T, wherein both b3 and b4 are positive integers, and T is the data cycle.

5. The method according to claim 1 or 2, wherein the start time point of the active time satisfies:

$$(c1*10+c2) \text{ modulo } c3=f3(T) \text{ modulo } c3+c5;$$

or

$$(c1*10+c2) \text{ modulo } c3=(f3(T)+c5) \text{ modulo } c3,$$

wherein

c1 represents a system frame number corresponding to the start time point, c2 represents a subframe number corresponding to the start time point, f3(T) represents a function related to T, c5 is configured by the radio access network device, and modulo represents a modulo operation; and

a greatest common divisor of c3 and c4 is 1, and satisfies: c3/c4=T, wherein both c3 and c4 are positive integers, and T is the data cycle.

6. The method according to claim 1 or 2, wherein the start time point of the active time satisfies:

$$\text{int}((d1*10+d2) \text{ modulo } d3)=\text{int}(d4 \text{ modulo } d3);$$

or

$$\text{int}((d1*10+d2) \text{ modulo } d3)=\text{int}(d4),$$

wherein

d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

7. The method according to claim 6, wherein the start time point of the active time is further related to a quantity of offset slots in the DRX cycle, and the quantity of offset slots in the DRX cycle is equal to int(((d1*10+d2-d4) modulo d3)*d5), wherein

d5 represents a quantity of slots in one subframe.

8. The method according to claim 1 or 2, wherein the start time point of the active time satisfies:

$$int(((e1*10+e2)*e3+e4) \text{ modulo } e5)=int((e6*e3+e7) \text{ modulo } e5),$$

wherein
e1 represents a system frame number corresponding to the start time point, e2 represents a subframe number corresponding to the start time point, e3 represents a quantity of slots comprised in one subframe, e4 represents an e4$^{th}$ slot in one subframe, e5=T*e3, T is the data cycle, e6 represents a quantity of offset subframes in a DRX cycle, e7 represents a quantity of offset slots in one subframe, modulo represents a modulo operation, and int represents a rounding operation.

9. The method according to claim 1 or 2, wherein the start time point of the active time satisfies:

$$f1*f2+f3=int[(f4+i*f5)*f2/10] \text{ modulo } (1024*f2),$$

wherein
f1 represents a system frame number corresponding to the start time point, f2 represents a quantity of slots comprised in one system frame, f3 represents a slot number corresponding to the start time point, f4 represents a quantity of offset subframes in a DRX cycle, f5 represents duration of the DRX cycle, f5=T, T is the data cycle, i represents an i$^{th}$ DRX cycle or the DRX active time, modulo represents a modulo operation, and int represents a rounding operation.

10. The method according to claim 1 or 2, wherein the start time point of the active time satisfies:

$$(g1*g2*g3)+(g4*g3)+g5=int[(g6*g2*g3+g7*g3+g8)+i*g9] \text{ modulo } (1024*g2*g3),$$

wherein
g1 represents a system frame number corresponding to the start time point, g2 represents a quantity of slots comprised in one system frame, g3 represents a quantity of symbols comprised in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an i$^{th}$ DRX cycle or the DRX active time, modulo represents a modulo operation, and int represents a rounding operation.

11. The method according to claim 1 or 2, wherein the start time point of the active time satisfies:

$$h1*10+h2=int[(h3+i*h4)] \text{ modulo } (1024*10),$$

wherein
h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an i$^{th}$ DRX cycle or the DRX active time, modulo represents a modulo operation, and int represents a rounding operation.

12. The method according to any one of claims 1 to 11, wherein the data cycle is configured by the radio access network device.

13. The method according to any one of claims 1 to 12, wherein the PDCCH carries information used to schedule the data.

14. The method according to any one of claims 1 to 13, wherein the data cycle T is a non-integer.

15. A communication method, comprising:
sending configuration information to a terminal, wherein the configuration information is used to configure that a start time point of a discontinuous reception DRX active time is determined based on a data cycle.

16. The method according to claim 15, further comprising:
sending control information to the terminal on a physical downlink control channel PDCCH in the DRX active time.

17. The method according to claim 16, wherein the control information is used to schedule the data.

18. The method according to any one of claims 15 to 17, wherein the start time point of the active time satisfies:

$$(a1*10+a2) \text{ modulo } a3 = f1(a4) \text{ modulo } a3 + a5;$$

or

$$(a1*10+a2) \text{ modulo } a3 = (f1(a4)+a5) \text{ modulo } a3,$$

wherein

a1 represents a system frame number corresponding to the start time point, a2 represents a subframe number corresponding to the start time point, f1(a4) represents a function related to a4, a5 is configured by a radio access network device, and modulo represents a modulo operation; and
a3 and a4 satisfy:
a3=int(T), and a4=T-int(T), wherein int represents a rounding operation, and T is the data cycle.

19. The method according to any one of claims 15 to 17, wherein the start time point of the active time satisfies:

$$(b1*10+b2) \text{ modulo } b3 = f2(b3, b4) \text{ modulo } b3 + b5;$$

or

$$(b1*10+b2) \text{ modulo } b3 = (f2(b3, b4)+b5) \text{ modulo } b3,$$

wherein

b1 represents a system frame number corresponding to the start time point, b2 represents a subframe number corresponding to the start time point, f2(b3, b4) represents a function related to b3 and b4, b5 is configured by a radio access network device, and modulo represents a modulo operation; and
a greatest common divisor of b3 and b4 is 1, and satisfies: b3/b4=T, wherein both b3 and b4 are positive integers, and T is the data cycle.

20. The method according to any one of claims 15 to 17, wherein the start time point of the active time satisfies:

$$(c1*10+c2) \text{ modulo } c3 = f3(T) \text{ modulo } c3 + c5;$$

or

$$(c1*10+c2) \text{ modulo } c3 = (f3(T)+c5) \text{ modulo } c3,$$

wherein

c1 represents a system frame number corresponding to the start time point, c2 represents a subframe number corresponding to the start time point, f3(T) represents a function related to T, c5 is configured by a radio access network device, and modulo represents a modulo operation; and
a greatest common divisor of c3 and c4 is 1, and satisfies: c3/c4=T, wherein both c3 and c4 are positive integers, and T is the data cycle.

21. The method according to any one of claims 15 to 17, wherein the start time point of the active time satisfies:

$$int((d1*10+d2) \text{ modulo } d3)=int(d4 \text{ modulo } d3);$$

or

$$int((d1*10+d2) \text{ modulo } d3)=int(d4),$$

wherein
d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

22. The method according to claim 21, wherein the start time point of the active time is further related to a quantity of offset slots in the DRX cycle, and the quantity of offset slots in the DRX cycle is equal to int(((d1*10+d2-d4) modulo d3)*d5), wherein
d5 represents a quantity of slots in one subframe.

23. The method according to any one of claims 15 to 17, wherein the start time point of the active time satisfies:

$$int(((e1*10+e2)*e3+e4) \text{ modulo } e5)=int((e6*e3+e7) \text{ modulo } e5),$$

wherein
e1 represents a system frame number corresponding to the start time point, e2 represents a subframe number corresponding to the start time point, e3 represents a quantity of slots comprised in one subframe, e4 represents an e4$^{th}$ slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation.

24. The method according to any one of claims 15 to 17, wherein the start time point of the active time satisfies:

$$f1*f2+f3=int[(f4+i*f5)*f2/10] \text{ modulo } (1024*f2),$$

wherein
f1 represents a system frame number corresponding to the start time point, f2 represents a quantity of slots comprised in one system frame, f3 represents a slot number corresponding to the start time point, f4 represents a quantity of offset subframes in a DRX cycle, f5 represents duration of the DRX cycle, f5=T, T is the data cycle, i represents an i$^{th}$ DRX cycle or the DRX active time, modulo represents a modulo operation, and int represents a rounding operation.

25. The method according to any one of claims 15 to 17, wherein the start time point of the active time satisfies:

$$(g1*g2*g3)+(g4*g3)+g5=int[(g6*g2*g3+g7*g3+g8)+i*g9] \text{ modulo } (1024*g2*g3),$$

wherein
g1 represents a system frame number corresponding to the start time point, g2 represents a quantity of slots comprised in one system frame, g3 represents a quantity of symbols comprised in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an i$^{th}$ DRX cycle or the DRX active time, modulo represents a modulo operation, and int represents a rounding operation.

26. The method according to any one of claims 15 to 17, wherein the start time point of the active time satisfies:

$$h1*10+h2=\text{int}[(h3+i*h4)] \text{ modulo } (1024*10),$$

wherein
h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an i$^{th}$ DRX cycle or the DRX active time, modulo represents a modulo operation, and int represents a rounding operation.

27. The method according to any one of claims 15 to 26, wherein the configuration information is further used to configure the data cycle.

28. The method according to any one of claims 15 to 26, further comprising:
sending, to the terminal, information used to configure the data cycle.

29. The method according to any one of claims 15 to 28, wherein the data cycle T is a non-integer.

30. A communication apparatus, comprising:

a processing unit, configured to determine a discontinuous reception DRX active time, wherein a start time point of the active time is related to a data cycle, wherein
the processing unit is further configured to control the communication apparatus to monitor a physical downlink control channel PDCCH in the DRX active time.

31. The apparatus according to claim 30, wherein the communication apparatus further comprises an interface unit, and the interface unit is configured to receive configuration information from a radio access network device; and the processing unit is specifically configured to determine the DRX active time based on the configuration information and the data cycle.

32. The apparatus according to claim 30 or 31, wherein the start time point of the active time satisfies:

$$(a1*10+a2) \text{ modulo } a3=f1(a4) \text{ modulo } a3+a5;$$

or

$$(a1*10+a2) \text{ modulo } a3=(f1(a4)+a5) \text{ modulo } a3,$$

wherein

a1 represents a system frame number corresponding to the start time point, a2 represents a subframe number corresponding to the start time point, f1(a4) represents a function related to a4, a5 is configured by the radio access network device, and modulo represents a modulo operation; and
a3 and a4 satisfy: a3=int(T), and a4=T-int(T), wherein int represents a rounding operation, and T is the data cycle.

33. The apparatus according to claim 30 or 31, wherein the start time point of the active time satisfies:

$$(b1*10+b2) \text{ modulo } b3=f2(b3, b4) \text{ modulo } b3+b5;$$

or

$$(b1*10+b2) \text{ modulo } b3=(f2(b3, b4)+b5) \text{ modulo } b3,$$

wherein

b 1 represents a system frame number corresponding to the start time point, b2 represents a subframe number corresponding to the start time point, f2(b3, b4) represents a function related to b3 and b4, b5 is configured by the radio access network device, and modulo represents a modulo operation; and
a greatest common divisor of b3 and b4 is 1, and satisfies: b3/b4=T, wherein both b3 and b4 are positive integers, and T is the data cycle.

34. The apparatus according to claim 30 or 31, wherein the start time point of the active time satisfies:

$$(c1*10+c2) \text{ modulo } c3=f3(T) \text{ modulo } c3+c5;$$

or

$$(c1*10+c2) \text{ modulo } c3=(f3(T)+c5) \text{ modulo } c3,$$

wherein

c1 represents a system frame number corresponding to the start time point, c2 represents a subframe number corresponding to the start time point, f3(T) represents a function related to T, c5 is configured by the radio access network device, and modulo represents a modulo operation; and
a greatest common divisor of c3 and c4 is 1, and satisfies: c3/c4=T, wherein both c3 and c4 are positive integers, and T is the data cycle.

35. The apparatus according to claim 30 or 31, wherein the start time point of the active time satisfies:

$$\text{int}((d1*10+d2) \text{ modulo } d3)=\text{int}(d4 \text{ modulo } d3);$$

or

$$\text{int}((d1*10+d2) \text{ modulo } d3)=\text{int}(d4),$$

wherein
d1 represents a system frame number corresponding to the start time point, d2 represents a subframe number corresponding to the start time point, d3=T, d3 represents duration of a DRX cycle, T is the data cycle, d4 represents a quantity of offset subframes in the DRX cycle, modulo represents a modulo operation, and int represents a rounding operation.

36. The apparatus according to claim 35, wherein the start time point of the active time is further related to a quantity of offset slots in the DRX cycle, and the quantity of offset slots in the DRX cycle is equal to int(((d1*10+d2-d4) modulo d3)*d5), wherein
d5 represents a quantity of slots in one subframe.

37. The apparatus according to claim 30 or 31, wherein the start time point of the active time satisfies:

$$\text{int}(((e1*10+e2)*e3+e4) \text{ modulo } e5)=\text{int}((e6*e3+e7) \text{ modulo } e5),$$

wherein e1 represents a system frame number corresponding to the start time point, e2 represents a subframe number corresponding to the start time point, e3 represents a quantity of slots comprised in one subframe, e4 represents an e4th slot in one subframe, e5=T*e3, T is the data cycle, e6 represents a quantity of offset subframes in a DRX cycle, e7 represents a quantity of offset slots in one subframe, (e6*e3+e7) represents a total quantity of offset slots starting from a start position of the DRX cycle, modulo represents a modulo operation, and int represents a rounding operation.

38. The apparatus according to claim 30 or 31, wherein the start time point of the active time satisfies:

$$f1*f2+f3=\text{int}[(f4+i*f5)*f2/10] \text{ modulo } (1024*f2),$$

wherein

f1 represents a system frame number corresponding to the start time point, f2 represents a quantity of slots comprised in one system frame, f3 represents a slot number corresponding to the start time point, f4 represents a quantity of offset subframes in a DRX cycle, f5 represents duration of the DRX cycle, f5=T, T is the data cycle, i represents an $i^{th}$ DRX cycle or the DRX active time, modulo represents a modulo operation, and int represents a rounding operation.

39. The apparatus according to claim 30 or 31, wherein the start time point of the active time satisfies:

$$(g1*g2*g3)+(g4*g3)+g5=int[(g6*g2*g3+g7*g3+g8)+i*g9] \text{ modulo } (1024*g2*g3),$$

wherein

g1 represents a system frame number corresponding to the start time point, g2 represents a quantity of slots comprised in one system frame, g3 represents a quantity of symbols comprised in one slot, g4 represents a subframe number corresponding to the start time point, g5 represents a number of a symbol corresponding to the start time point, g6 represents a quantity of offset subframes in a DRX cycle, g7 represents a quantity of offset slots in the DRX cycle, g8 represents a quantity of offset symbols in the DRX cycle, g9 represents duration of the DRX cycle, g9=T, T is the data cycle, i represents an $i^{th}$ DRX cycle or the DRX active time, modulo represents a modulo operation, and int represents a rounding operation.

40. The apparatus according to claim 30 or 31, wherein the start time point of the active time satisfies:

$$h1*10+h2=int[(h3+i*h4)] \text{ modulo } (1024*10),$$

wherein

h1 represents a system frame number corresponding to the start time point, h2 represents a slot number corresponding to the start time point, h3 represents a quantity of offset subframes in a DRX cycle, h4 represents duration of the DRX cycle, h4=T, T is the data cycle, i represents an $i^{th}$ DRX cycle or the DRX active time, modulo represents a modulo operation, and int represents a rounding operation.

41. The apparatus according to any one of claims 30 to 40, wherein the data cycle is configured by the radio access network device.

42. The apparatus according to any one of claims 30 to 41, wherein the PDCCH carries information used to schedule the data.

43. The apparatus according to any one of claims 30 to 42, wherein the data cycle T is a non-integer.

44. A communication apparatus, comprising a processor, wherein the processor is coupled to a memory, and the memory is configured to store a program or instructions; and when the program or the instructions are executed by the processor, the communication apparatus is enabled to perform the method according to any one of claims 1 to 14.

45. A communication apparatus, comprising a processor, wherein the processor is coupled to a memory, and the memory is configured to store a program or instructions; and when the program or the instructions are executed by the processor, the communication apparatus is enabled to perform the method according to any one of claims 15 to 29.

46. A chip system, comprising at least one processor and an interface circuit, wherein the interface circuit is coupled to the at least one processor, and the processor performs the method according to any one of claims 1 to 14 or the method according to any one of claims 15 to 29 by running instructions.

47. A computer-readable storage medium, wherein the storage medium stores a computer program or instructions; and when the computer program or the instructions are executed by a communication apparatus, the method according to any one of claims 1 to 14 or the method according to any one of claims 15 to 29 is implemented.

48. A communication system, comprising a communication apparatus configured to perform the method according to any one of claims 1 to 14 and a communication apparatus configured to perform the method according to any one of claims 15 to 29.

FIG. 1

FIG. 2

FIG. 3

Long DRX cycle

Short DRX cycle

FIG. 4

Cycle of data

16.67 ms 16.67 ms 16.67 ms 16.67 ms

Time

DRX cycle

16 ms 16 ms 16 ms 16 ms

FIG. 5

A terminal determines a DRX active time, where a start time point of the active time is related to a cycle of data | 601

The terminal monitors a PDCCH in the DRX active time | 602

FIG. 6

0 ms   16 ms   33 ms   50 ms   ...   Time

FIG. 7

50 ms DRX cycle

0 ms   16 ms   33 ms   50 ms   ...   Time

First active time   Second active time   Third active time

FIG. 8

FIG. 9

FIG. 10

FIG. 11

Communication apparatus 1200

Processor 1210

Interface circuit 1220

Memory 1230

FIG. 12

## INTERNATIONAL SEARCH REPORT

| International application No. |
| --- |
| **PCT/CN2023/081948** |

**A.      CLASSIFICATION OF SUBJECT MATTER**

H04W76/28(2018.01)i

According to International Patent Classification (IPC) or to both national classification and IPC

**B.      FIELDS SEARCHED**

Minimum documentation searched (classification system followed by classification symbols)

IPC：H04W, H04Q, H04L

Documentation searched other than minimum documentation to the extent that such documents are included in the fields searched

Electronic data base consulted during the international search (name of data base and, where practicable, search terms used)

3GPP, CNTXT, ENTXT, WPABS: 非连续, DRX, 激活, 活跃, 起始, 开始, 数据, 业务, 对齐, 匹配, 适配, 周期, 频率, 帧率, 延迟, 延时, 时延, 功率, 节省, 节约, disconnect, active, start, data, service, align, match, adapt, period, frame, frequency, rate, delay, latency, power, saving, XR, traffic, PDCCH, monitor

**C.      DOCUMENTS CONSIDERED TO BE RELEVANT**

| Category* | Citation of document, with indication, where appropriate, of the relevant passages | Relevant to claim No. |
| --- | --- | --- |
| PX | CN 115734320 A (HONOR TERMINAL CO., LTD.) 03 March 2023 (2023-03-03) description, paragraphs [0081]-[0099], [0105]-[0111] and [0133]-[0168], and figures 1-4 | 1-48 |
| PX | WO 2022237527 A1 (HUAWEI TECHNOLOGIES CO., LTD.) 17 November 2022 (2022-11-17) description, p. 7, line 17 to p. 23, line 5, and figures 1-3, 5-7 and 10-11 | 1-48 |
| X | CN 111565443 A (TELECOMMUNICATIONS TECHNOLOGY RESEARCH INSTITUTE CO., LTD.) 21 August 2020 (2020-08-21) description, paragraphs [0075]-[0181], and figures 1-2 | 1-48 |
| X | QUALCOMM INPORATED et al. "DRX enhancement for XR and CG applications" *3GPP TSG-RAN WG2 Meeting #115-e R2-2108850*, 27 August 2021 (2021-08-27), section 2 | 1-2, 12-17, 27-31, 41-48 |
| X | CN 109246625 A (CHENDU TD TECH LTD.) 18 January 2019 (2019-01-18) description, paragraphs [0006]-[0016] | 1-2, 12-17, 27-31, 41-48 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2023** | **16 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/081948**

**C.    DOCUMENTS CONSIDERED TO BE RELEVANT**

| Category* | Citation of document, with indication, where appropriate, of the relevant passages | Relevant to claim No. |
|---|---|---|
| A | US 2022095355 A1 (QUALCOMM INCORPORATED) 24 March 2022 (2022-03-24) entire document | 1-48 |

Form PCT/ISA/210 (second sheet) (July 2022)

**INTERNATIONAL SEARCH REPORT**
**Information on patent family members**

International application No.

**PCT/CN2023/081948**

| Patent document cited in search report | | | Publication date (day/month/year) | Patent family member(s) | | | Publication date (day/month/year) |
|---|---|---|---|---|---|---|---|
| CN | 115734320 | A | 03 March 2023 | None | | | |
| WO | 2022237527 | A1 | 17 November 2022 | CN | 115334696 | A | 11 November 2022 |
| CN | 111565443 | A | 21 August 2020 | None | | | |
| CN | 109246625 | A | 18 January 2019 | None | | | |
| US | 2022095355 | A1 | 24 March 2022 | WO | 2022060869 | A1 | 24 March 2022 |
| | | | | IN | 202327003289 | A | 03 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210453381

- CN 202210951229